# NEUE EUROPÄISCHE PATENTSCHRIFT

(11) **EP 0 755 749 B2**
(45) Veröffentlichungstag und Bekanntmachung des Hinweises auf die Entscheidung über den Einspruch: **07.06.2006**
(45) Hinweis auf die Patenterteilung: 09.10.2002
(21) Anmeldenummer: 96109214.5
(22) Anmeldetag: 07.06.1996
(51) Int. Cl.: B23P 19/06, B23P 19/00

(54) **Führungs- und/oder Setzeinrichtung für Elemente, insbesondere Fügeelemente**
Guiding and/or fixing device for elements, particularly fastening elements
Dispositif de guidage et/ou de fixation pour éléments, particulièrement pour éléments de fixation

(30) Priorität: 07.06.1995 US 482760; 05.01.1996 DE 19600290
(43) Veröffentlichungstag der Anmeldung: 29.01.1997
(73) Patentinhaber: PROFIL-Verbindungstechnik GmbH & Co. KG, 61381 Friedrichsdorf (DE); MULTIFASTENER CORPORATION, Detroit, Michigan 48239 (US)
(72) Erfinder: Boncek, Zdenek, 35415 Pohlheim (DE); Vieth, Michael, 61118 Bad Vilbel (DE); Sickels, David, Southfield, Michigan 48034 (US)
(74) Vertreter: Manitz, Finsterwald & Partner GbR

(56) Entgegenhaltungen:
- EP-A- 0 553 529
- WO-A-93/19890
- CH-A- 539 493
- FR-A- 2 622 261
- GB-A- 934 101
- US-A- 3 780 417
- US-A- 4 242 793
- US-A- 4 574 453

## Beschreibung

Die vorliegende Erfindung betrifft eine Führüngs- und/oder Setzeinrichtung für Elemente, insbesondere Fügeelemente, nach dem Oberbegriff den Ansprüchen 1, 15 und 18, d.h. eine Setzeinrichtung bestehend aus einem hohlen Führungsstück, einem innerhalb des Führungsstücks axial verschiebbar angeordneten Stempel und senkrecht zum Stempel verschiebbar geführten Haltegliedern mit an ihrem einen, dem Stirnende des Stempels zugeordneten Ende vorgesehenen Haltenasen, wobei in einer zurückgezogenen Beladeposition des Stempels jeweils ein Element von der Seite her zwischen den Haltenasen und dem freien Stirnende des Stempels einführbar ist und die Haltenasen anschließend während einer Vorschubbewegung des Stempels unter der Einwirkung dieses seitlich nach außen bewegbarsind, um das Element freizugeben, wobei die Halteglieder Bestandteile einer parallel zum Stempel verschiebbar geführten Trägereinrichtung sind, wobei die Trägereinrichtung über einen Teil der Bewegung des Stempels bis zur Freigabe des Elements mit dem Stempel synchron bewegbar ist.

Bei der Massenherstellung von Teilen werden häufig Setzeinrichtungen für Fügeelemente verwendet, um gleichzeitig Fügeelemente an beispielsweise einem Blechstück bzw. einer Tafel (nachfolgend lediglich Tafel genannt) anzubringen, während die Tafel in einer Presse geformt wird. Die Setzeinrichtung ist in der Presse angeordnet, und das Fügeelement wird angebracht während sich die Presse schließt. Die Setzeinrichtung weist ein Gehäuse, einen Stempeldurchgang, einen wirksam im Stempeldurchgang angeordneten Stempel sowie einen Fügeelement-Zufuhrmechanismus auf, der Fügeelemente in den Stempeldurchgang einführt. Der Durchgang und das Fügeelement weisen komplementäre Formen auf, und der Stempel ist so ausgebildet, daß er das Fügeelement durch den Durchgang hindurch in die Tafel treibt. Um die anfängliche Ausrichtung des Fügeelementes bezüglich des Stempels zu unterstützen, werden Fangelemente verwendet, um das Fügeelement in dem Durchgang zu halten während das Fügeelement eintritt. Sobald der Stempel mit dem Fügeelement in Kontakt gelangt, fällt das Fügeelement entweder durch zum Werkstück, oder es wird vorübergehend durch beispielsweise federbelastete Anschläge gehalten, die sich in den Durchgang hinein erstrecken.

Obwohl der Durchgang und das Fügeelement so konfiguriert sind, daß sie die richtige Ausrichtung des Fügeelementes bezüglich des Stempels und der Tafel erleichtern, kann eine Fehlausrichtung des Fügeelementes innerhalb des Durchgangs auftreten. Wenn beispielsweise die Anschläge festsitzen oder versagen, stellt sich das Fügeelement im Durchgang schräg und ist fehlausgerichtet, wenn es in die Tafel getrieben wird. Fehlausrichtungsprobleme verschärfen sich, wenn die Setzeinrichtung bezüglich des Werkstücks nicht vertikal orientiert ist. Nicht-vertikale Orientierungen treten sehr häufig auf. Eine Fehlausrichtung kann fehlerhafte Anbringungen, eine Beschädigung des Teils sowie eine Beschädigung der Setzeinrichtung zur Folge haben.

Eine Führungs- und/oder Setzeinrichtung der eingangs genannten Art ist aus der internationalen Patentanmeldung PCT/EP93/00836 mit der internationalen Veröffentlichungsnummer WO 93/19890 bekannt, und zwar in Form eines Setzkopfs, welcher zur Einbringung von Füge- und Hilfsfügeteilen, wie zum Beispiel Muttern, Bolzen, Nieten in einem Blechteil ausgebildet ist. Auch die vorliegende Erfindung kann als Setzeinrichtung bzw. Setzkopf für die Befestigung von Teilen wie Füge- und Hilfsfügeteilen an Blechteilen oder an anderen Gegenständen verwendet werden, kann aber auch einfach als Führungseinrichtung dienen, beispielsweise zum Absetzen von einzelnen Gegenständen in jeweilige Aufnahmen.

Bei der Setzeinrichtung nach der WO-Schrift 93/19890, sind die Halteglieder, welche die Haltenasen tragen, durch zwei Haltefinger gebildet, welche in seitlichen Nuten des Stempels geführt sind und an ihren oberen Enden über jeweilige Lagerstifte an diesem schwenkbar angebracht sind. An ihren äußeren Seiten sind die Haltefinger mit einer besonderen Formgebung versehen, welche mit einem ebenfalls eine besondere Formgebung aufweisenden Führungsstück bzw. Führungsgehäuse zusammenarbeitet. Die Haltenasen sind einstückig mit den Haltefingern ausgebildet, ausgebildet, und die Aufnahmen für die Lagerbolzen im Stempel sind in Form von Langlöchern realisiert.

In der Beladeposition können jeweilige Elemente seitlich in einen Raum eingeführt werden, welcher zwischen den Haltenasen der Haltefinger und dem diesen zugeordneten Stirnende des Stempels ausgebildet ist. Bei einer nach unten gerichteten Bewegung des Stempels gegenüber dem Führungsstück drückt der Stempel über das jeweilige Element gegen die Haltefinger, die sich synchron mit dem Stempel nach unten bewegen, bis sie an ein Blechteil stoßen. In dieser Stellung gestattet die Formgebung des Führungsstücks eine radial nach außen gerichtete Schwenkbewegung der Haltefinger, welche aufgrund der durch den Stempel auf das Element ausgeübten Kraft erfolgt, wodurch die Haltenasen sich in der Freigabeposition vom jeweiligen Element entfernen und dieses durch Zusammenarbeit zwischen dem Stempel und einer unterhalb des Blechteils angeordneten Matrize mit dem Blechteil vernietet wird.

Eine derartige Anordnung hat sich zwar in der Praxis bewährt, ist jedoch relativ komplex und daher unter hohem Kostenaufwand herzustellen, und zwar aufgrund der erforderlichen Formgebungen an den Haltefingern und dem Führungsstück sowie aufgrund der für die Schwenkbewegung der Haltefinger erforderlichen Lagerbolzen und ihrer Langlochaufnahmen im Stempel.

Der in der Druckschrift WO 93/19890 dargestellte Setzkopf beseitigt die oben genannten Probleme. Jedoch besitzt er Nachteile. Erstens halten die Haltefinger, die das Fügeelement gegen den Stempel halten, das Fügeelement nicht am kritischen Punkt des Kontakts mit dem Werkstück. Die Anmelder haben festgestellt, daß es wichtig ist, das Fügeelement so lange zu halten, bis wenigstens das Anbringungsende des Fügeelementes sich mit dem Werkstück in Eingriff befindet, so daß das Fügeelement zwischen dem Stempel und dem Werkstück gehalten wird. An diesem Punkt können die Haltefinger entfernt werden, und eine richtige Anbringung ist gewährleistet. Außerdem haben die Anmelder festgestellt, daß es in vielen Anwendungen wichtig ist, daß die Haltefinger den Führungskontakt mit dem Fügeelement aufrechterhalten, bis das Fügeelement vollständig an der Tafel angebracht ist. Keine dieser Haftetechniken kann durch die offenbarte Lehre erzielt werden, da die Haltefinger durch den Kontakt mit der Tafeloberfläche nockenartig vom Fügeelement wegbewegt werden. Per Definition geben die Haltefinger das Fügeelement frei, bevor das Fügeelement einen Anbringungskontakt mit der Tafel herstellt. Obwohl diese Entfernung gering ist, reicht sie aus, um eine Fehlausrichtung der Fügeelemente zu ergeben. Dies ist umso mehr der Fall, als die Tafeloberfläche als eine Nockenfläche wirken muß, obwohl sie tatsächlich nicht als Nockenfläche entworfen ist. Daher kann irgendeine Beschränkung der Haltefinger zur Folge haben, daß sich die Haltefinger nicht-in der richtigen Weise bewegen, was ein schräggestelltes Fügeelement am kritischen Anbringungspunkt zur Folge hat. Jegliches Verkippen des Fügeelementes bei der Anbringung kann eine untaugliche Anbringung des Fügeelementes zur Folge haben.

Ein weiterer Nachteil des in der ebenfalls anhängigen Anmeldung beanspruchten Setzkopfes ist das potentielle Beschädigen oder Zerkratzen der Tafeloberfläche aufgrund der Tatsache, daß die Haltefinger bei der Anbringung nockenartig gegen die Oberfläche wirken. Dieses Beschädigen oder Zerkratzen kann in vielen Anwendungen nicht akzeptiert werden, was das Verwerfen von Tafeln und erhöhte Herstellungskosten zur Folge hat.

D. h., ein weiterer Nachteil der Setzeinrichtung nach der PCT-Anmeldung PCT/EP93/00836 liegt darin, daß die Haltefinger das Blechteil während des Absetzens des Elements nicht nur berühren, sondern aufgrund der eintretenden Schwenkbewegung dieses markieren können, wodurch die Oberfläche des Blechteils beschädigt werden kann.

Aufgabe der vorliegenden Erfindung ist es, eine Führungs- und/oder Setzeinrichtung der eingangs genannten Art zu schaffen, welche bei robuster Konstruktion zuverlässig arbeitet und preisgünstig herstellbar ist, und für eine saubere Führung der Elemente bis zur Absetzung derselben sorgt, wobei die Einrichtung keiner besonderen Beschränkung bezüglich der Querschnittsform des Stempels unterliegt.

Bei einer ersten erfindungsgemäßen Lösung dieser Aufgabe entsprechend Anspruch 1 wird vorgesehen, daß die Trägereinrichtung zumindest im wesentlichen nur linear verschiebbar geführt ist, daß die die Haltenasen aufweisenden Halteglieder am in seitlicher Richtung innerhalb der Trägereinrichtung verschiebbar geführt sind, und daß die Innenwand des Führungsstücks derart gestaltet ist, daß die in der Beladeposition des Stempels nach innen gedrückten Halteglieder beim Erreichen der Freigabeposition relativ zur Trägereinrichtung seitlich nach außen drückbar sind.

Die Trägereinrichtung, die entweder wie bisher als Haltefinger oder aber auch als Hülse ausgebildet werden kann, wird bei der erfindungsgemäßen Lösung nur linear verschoben und führt keine Schwenkbewegung aus. Die Führung der Trägereinrichtung gestaltet sich daher relativ einfach.

Die radiale Schließ- bzw. Öffnungsbewegung der Haltenasen wird nach dem erfindungsgemäßen Vorschlag nicht durch Verschwenkung von Haltefingern, sondern durch eine Verschiebebewegung von die Haltenasen aufweisenden Gliedern innerhalb der Trägereinrichtung realisiert, wobei diese radiale Bewegung der Glieder durch eine einfache Profilierung der Innenwand des Führungsstücks in Abhängigkeit von der Stellung der sich mit dem Stempel synchron bewegenden Trägereinrichtung gesteuert wird.

In einer besonders bevorzugten Ausführungsform werden die Glieder durch Kugeln realisiert, welche preisgünstig erhältlich sind und in einfache radiale Bohrungen der Trägereinrichtung eingesetzt werden können, wobei die jeweiligen Bohrungen an ihren inneren Enden einen kleineren Durchmesser als die Kugeln aufweisen müssen, um zu verhindern, daß die Kugeln in der zurückgezogenen Beladeposition des Stempels verloren gehen.

An dieser Stelle soll der Vollständigkeit halber auch noch auf die CH-PS 539 493 hingewiesen werden, welche einen Schraubenzieher mit einer Schraubenkopffassung und einer dieser zugeordneten Halteeinrichtung für den Kopf einer in die Schraubenkopffassung eingesetzten Schraube offenbart.

Hier umfaßt die bekannte Einrichtung ebenfalls Kugeln, welche in entsprechenden radialen Bohrungen einer verschiebbaren, eine Trägereinrichtung bildenden Hülse angeordnet sind, wobei die Kugeln nach dem Einsetzen einer Schraube in den Schraubenzieheraufgrund der Formgebung einer weiteren verschiebbaren Hülse nach innen gedrückt werden und unterhalb des Schraubenkopfs liegen, so daß dieser zwischen der Schneide des Schraubenzieherschaftes und den Kugeln gehalten wird. Während der Einschraubbewegung der Schraube wird die äußere Hülse gegenüber der Trägereinrichtung zurückgedrängt, und die Kugeln können unter dem ausgeübten Druck des Schraubenkopfs sich radial nach außen bewegen, wodurch der Schraubenkopf freigegeben wird.

Die Anordnung gemäß der CH-PS 539 493 ist jedoch keine gattungsgemäße Führungs- und/oder Setzeinrichtung, und darüber hinaus sind die Kugeln in der Beladeposition des Stempels nicht nach innen gedrückt, sondern müssen erst nach außen gedrückt werden, um eine Schraube von unten in den Schraubenzieher einzuführen.

Eine weitere erfindungsgemäße Lösung der erfindungsgemäßen Ansprüche ist dem nebengeordneten Anspruch 15 zu entnehmen. Diese weitere Lösung überwindet die vorstehenden Probleme, indem eine Setzeinrichtung geschaffen wird, die Haltefinger aufweist, welche ein Fügeelement halten, und zwar von dem Punkt, an welchem das Fügeelement in den Stempeldurchgang eintritt, bis zur teilweisen oder vollständigen Anbringung des Fügeelementes an beispielsweise einer Tafel. Der Begriff "Tafel" wird hier verwendet, um das Werkstück zu definieren. Tafel kann beispielsweise eine Platte, ein Blechteil wie zum Beispiel eine Karosserietafel, einen Träger oder ein strukturelles Bauteil umfassen. Die Lösung nach Anspruch 15 ist zur Anwendung mit einem verbesserten Fügeelement ausgelegt, welches Seiten aufweist, die versetzt angeordnet sind, um zu den freien Enden der Haltefinger in der Setzeinrichtung so zu passen, daß das Fügeelement während seines gesamten Laufweges gehalten und geführt werden kann. Das Anbringen eines Fügeelementes mit dieser Setzeinrichtung erfolgt so, daß das Fügeelement während seiner gesamten Bewegung gehalten wird, um ein in der richtigen Weise ausgerichtetes, in der richtigen Weise angebrachtes Fügeelement zu gewährleisten. Der vorliegende Aspekt der Erfindung wird bezüglich Fügeelementen vom Pierce- bzw. Stanz-Typ beschrieben, wäre jedoch auch für andere Fügeelement-Typen geeignet, wie beispielsweise Fügeelemente vom Niet-Typ, Schweißmuttern, etc.

Die Setzeinrichtung gemäß dem vorliegenden Aspekt der Erfindung ist insbesondere so ausgebildet, dass der Hauptkörper als hülsenförmiges Führungsstück ausgebildet ist, welches eine Bohrung oder einen Fügeelement-Durchgang sowie einen Fügeelement-Eintrittsweg zum Einsetzen von Fügeelementen in den Durchgang benachbart dem Stempel aufweist. Das Führungsstück bewegt sich hin und her relativ zum Stempel, welcher ein freies Ende aufweist, das ausgebildet ist, um mit dem Fügeelement in Eingriff zu gelangen, wenn sich das Fügeelement im Stempeldurchgang befindet, um das Fügeelement durch den Hauptkörper hindurch und in eine Tafel oder ein anderes Werkstück zu treiben. Wenigstens zwei Haltefinger sind wirksam mit dem Stempel und dem Fügeelement verbunden und schwenkbar bezüglich des Stempels und des Fügeelementes angebracht. Die Haltefinger erstrecken sich über das freie Ende des Stempels hinaus, um mit dem Fügeelement in Eingriff zu gelangen, und um insbesondere mit einer auf dem Fügeelement ausgebildeten versetzten Fläche in Eingriff zu gelangen. Die Haltefinger halten das Fügeelement benachbart dem Stempel, während der Stempel das Fügeelement zur Tafel treibt. Dadurch ist sichergestellt, daß das Fügeelement positiv in einer richtigen ausgerichteten Position bezüglich des Stempels und der Tafel gehalten wird, und zwar von dem Punkt, an welchem das Fügeelement in den Stempeldurchgang eintritt, bis wenigstens zum Eingriff des Fügeelementes gegen die Tafel.

Das Fügeelement, das mit der Setzeinrichtung gemäß Anspruch 15 zur Anwendung gelangt, umfaßt ein Oberteil, ein Unterteil und Seiten, wobei das Unterteil eine Konfiguration aufweist, die, wenn in ein Werkstück gepreßt, das Unterteil des Fügeelementes und das Werkstückmaterial eng miteinander verbindet oder verzahnt, um eine feste Verbindung zwischen dem Fügeelement und dem Werkstück zu schaffen. Oberteil, Unterteil, Seite, etc. sind relative Begriffe, die zur Vereinfachung der Beschreibung verwendet werden. Jedoch kann die Setzeinrichtung gemäß diesem Aspekt der Erfindung ausgebildet sein, um ein Fügeelement an einer Tafel in beinahe jeder Stellung zu befestigen, und somit sind derartige Begriffe nicht beschränkend. Die Seite des Fügeelementes umfaßt eine versetzte Fläche, die zwischen dem Oberteil und dem Unterteil des Fügeelementes positioniert ist. Die versetzte Fläche ist ausgelegt, die Haftefinger in einem positiven Zwischeneingriff zwischen dem Fügeelement und den Hattefingem der Setzeinrichtung aufzunehmen, um das Fügeelement bezüglich des Werkstücks genau zu positionieren und auszurichten. Die Versatzfläche ist durch einen versetzten Abschnitt in der Seite des Fügeelementes definiert, der zu dem freien Ende der Haftefinger der Setzeinrichtung paßt. Die versetzte Fläche kann in Form einer Nut mit einem im allgemeinen halbkreisförmigen oder dreieckigen Querschnitt, einer Rippe oder eines Rückens mit einem im allgemeinen halbkreisförmigen Querschnitt, einer Kerbe oder Vertiefung, die so ausgebildet ist, daß sie einen Vorsprung auf dem freien Ende der Haltefinger aufnimmt, eines Vorsprungs, der ausgelegt ist, in einer Vertiefung auf dem freien Ende der Haltefinger aufgenommen zu werden, eines Schlitzes, der sich senkrecht zu den oberen und unteren Flächen erstreckt, etc. vorliegen. Für den Fachmann ist zu erkennen, daß viele unterschiedliche Typen von versetzten Flächen für den positiven Eingriff zwischen den Haltefingern und dem Fügeelement sorgen.

Die Haltefinger gemäß dem vorliegenden Aspekt der Erfindung werden in drei unterschiedlichen Ausführungsformen offenbart. Der Fachmann wird jedoch erkennen, daß andere Ausführungsformen in den Bereich der Erfindung fallen würden. Wichtig ist, daß die Haltefinger am Stempel angebracht sind und ein Fügeelement wenigstens bis zu dem Punkt halten, an welchem das Fügeelement zwischen dem Stempel und dem Werkstück eingefangen ist, bevor die Haltefinger das Fügeelement freigeben. In einer Ausführungsform sind die Haltefinger schwenkbar am Stempel angebracht, und die Schwenkbewegung wird durch aneinandergrenzende profilierte Flächen auf dem Haltefinger und dem Führungsstück gesteuert, die gegeneinander gleiten, während sich das Führungsstück bezüglich des Stempels bewegt. Die äußere Kante des Haltefingers, vom Stempel abgewandt, ist in dieser Ausführungsform profiliert und befindet sich in Eingriff mit der inneren Wand des Stempeldurchgangs im Führungsstück, die einen komplementäre Kontur aufweist. Die Haltefinger-Kontur umfaßt einen Führungs- oder Steuerabschnitt, dersich mit einem komplementären Führungsabschnitt auf dem in Eingriff befindet, der dem nach innen in der Richtung des Stempels gezwungenen Haltefinger entspricht, um das Fügeelement benachbart dem Ende des Stempels zu halten. Oberhalb der Führungsfläche, in der Richtung entgegengesetzt zu dem Werkstück, befindet sich eine Versatzregion, die so ausgebildet ist, daß sie zu einer Versatzregion im Führungsstück paßt, um ausreichend Raum für den Haltefinger zum Wegschwenken vom Fügeelement zu schaffen. Die Haltefinger geben das Fügeelement durch das Wegnehmen des Stempels vom Fügeelement nach vollständiger Anbringung frei. In dieser Ausführungsform sind die Greifspitze des Haltefingers und die versetzte Seite des Fügeelementes mit Nockenflächen versehen, die den Haltefingern gestatten, bezüglich des Fügeelementes zu verschwenken während der Stempel nach der Anbringung zurückgezogen wird.

In einer weiteren Ausführungsform sind die Haltefinger schwenkbar am Stempel angebracht und weisen eine Nockenfläche an einem Ende gegenüber den Greifspitzen der Haltefinger auf. Die freien Enden der Haltefinger, die jeweils die Greifspitzen definieren, sind ausgebildet, um mit der versetzten Fläche des Fügeelementes in Eingriff zu gelangen. Die Haltefinger werden in Eingriff mit der versetzten Fläche des Fügeelementes durch eine Feder oder entgegengesetzte Federn gezwungen, die sich zwischen dem Haltefinger und dem Stempel erstrecken. In einer Ausführungsform ist eine Ausnehmung im Führungsstück ausgebildet, die einen Federkopf aufnimmt, und Beine erstrecken sich ausgehend vom Kopf, um eine Vorspannung gegen den Haltefinger zu bewirken. Alternativ könnte eine Ausnehmung im Stempel ausgebildet sein, die sich mit der gegenüberliegenden Seite des Haltefingers in Eingriff befinden würde, um den Haltefinger in Eingriff mit dem Fügeelement vorzuspannen. In dieser Ausführungsform befindet sich die Feder in Eingriff mit dem Haltefinger oberhalb des Schwenkpunktes, der sich zwischen der Greifspitze und dem Federeingriffspunkt befindet. In dieser Ausführungsform, wenn das Fügeelement vollständig angebracht worden ist, bewirkt ein Zurückziehen des Stempels, daß die Greifspitze nockenartig gegen den versetzten Abschnitt des Fügeelementes wirkt, um die Haltefinger gegen die Vorspannung der Feder zu verschwenken und die Greifspitzen vom Fügeelement zu lösen.

Für den Fachmann ist ersichtlich, daß andere Ausführungsformen verwendet werden könnten, um ähnliche Ergebnisse und Ziele zu erhalten, wobei diese Ausführungsformen nach wie vor in den Bereich der Erfindung fallen würden.

Eine dritte erfindungsgemäße Lösung der genannten Aufgabe ist dem Anspruch 18 zu entnehmen. Weitere bevorzugte Ausführungsformen dervorliegenden Erfindung sind den Unteransprüchen sowie der weiteren Beschreibbung zu entnehmen.

Die Erfindung wird nachfolgend anhand von Ausführungsbeispielen unter Bezugnahme auf die Zeichnung näher erläutert; in dieser zeigt:
- Fig. 1: einen schematischen Längsschnitt durch eine erfindungsgemäße Führungs- und/oder Setzeinrichtung, und zwar in einer Beladeposition vor Aufnahme eines einzusetzenden Elements,
- Fig. 2: die gleiche Darstellung wie in Fig. 1, jedoch nach der Einführung eines Elements,
- Fig. 3: die gleiche Einrichtung wie in Fig. 1 und 2 beim Erreichen der Freigabeposition,
- Fig. 4: die gleiche Einrichtung wie in Fig. 1, 2 und 3 nach der Freigabe des Elements,
- Fig. 5: die Einrichtung der Fig. 1, 2, 3 und 4 während der Rückstellbewegung nach dem Absetzen des Elements,
- Fig. 6: eine Seitenansicht eines Haltefingerelements der bisherigen Fig. 1 bis 5, und zwar in Pfeilrichtung VI der Fig. 5 gesehen,
- Fig. 7: die Seitenansicht des Haltefingers von Fig. 6 in Pfeilrichtung VII gesehen,
- Fig. 8: einen Querschnitt durch die Einrichtung der Fig. 1 nach der Schnittebene VIII-VIII,
- Fig. 9: einen schematischen Längsschnitt durch die eine der Setzeinrichtung der Fig. 1 sehr ähnliche Setzeinrichtung, jedoch in einem Längsschnitt senkrecht zum Längsschnitt der Fig. 1, wobei die gesamte Setzeinrichtung nach der Befestigung am oberen Werkzeug eine Presse gezeigt ist,
- Fig. 10: einen Längsschnitt durch die gesamte Setzeinrichtung der Fig. 9 entlang der Schnittebene XI-XI,
- Fig. 11: die gleiche Einrichtung wie in Fig. 10, jedoch im Zustand nach dem Einsetzen eines Elements in ein Blechteil,
- Fig. 12: eine Draufsicht auf die Oberseite der Setzeinrichtung der Fig. 9 in der Ebene XII-XII gesehen,
- Fig. 13: eine schematische Darstellung einer weiteren erfindungsgemäßen Setzeinrichtung ähnlich der Fig. 1, jedoch mit anderen die Haltenasen aufweisenden Gliedern,
- Fig. 14: einen schematischen Längsschnitt durch die Setzeinrichtung der Fig. 13 in der Ebene XIV-XIV der Fig. 13 gesehen,
- Fig. 15: eine Darstellung einer noch weiteren erfindungsgemäßen Setzeinrichtung entsprechend der Fig. 13,
- Fig. 16: eine Seitenansicht des Haltefingers der Fig. 15 in Pfeilrichtung XVI gesehen,
- Fig. 17: die Setzeinrichtung der Fig. 15 in der Freigabeposition entsprechend der Fig. 4,
- Fig. 18: einen schematischen Querschnitt durch eine noch weitere erfindungsgemäße Setzeinrichtung mit im Querschnitt kreisförmigem Stempel,
- Fig. 19: eine Zeichnung entsprechend Fig. 4, jedoch mit einem anderen Element und mit kleinen Änderungen der Führungs- und Setzeinrichtung,
- Figur 20: einen longitudinalen Querschnitt durch eine Setzeinrichtung gemäß einem weiteren Aspekt der Erfindung,
- Figur 21: einen longitudinalen Querschnitt durch die Halteeinrichtung der Setzeinrichtung von Figur 20, wobei die Halteeinrichtung in verschiedenen Betriebszuständen auf der linken und rechten Seite von Figur 20 gezeigt ist,
- Figur 22: einen longitudinalen Querschnitt einer weiteren Ausführungsform der Halteeinrichtung,
- Figur 23: eine Endansicht der Einrichtung von Figur 22,
- Figur 24: einen longitudinalen Querschnitt einer weiteren Ausführungsform der Halteeinrichtung,
- Fig. 25: einen Längsschnitt durch eine weitere erfindungsgemäße Fürhrungs- und Setzeinrichtung entsprechend der Schnittebene XXV-XXV der Fig. 35,
- Fig. 26: die Führungs- und Setzeinrichtung der Fig. 25 in einer anderen Betriebsstellung,
- Fig. 27 bis 34: die Führungs- und Setzeinrichtung der Fig. 25 und 26 in weiteren, aufeinanderfolgenden Phasen des Betriebsablaufes bei der Führung und Einsetzung eines Fügeelementes in ein Blechteil,
- Fig. 35: einen Längsschnitt durch die Führungs- und Setzeinrichtung der Fig. 25 im wesentlichen in der Schnittebene XXXV-XXXV der Fig. 25,
- Fig. 36: eine Darstellung ähnlich der Fig. 34, jedoch nach dem Absetzen und Einnieten eines Fügeelementes im Blechteil,
- Fig. 37: einen vergrößerten Querschnitt durch die Führungs- und Setzeinrichtung der Fig. 25 entsprechend der Schnittebene XXXVII-XXXVII der Fig. 25,
- Fig. 38 A, B, C, D: Zeichnungen zur Darstellung der Form der bei der Führungs- und Setzeinrichtung der Fig. 25 verwendeten Haltefinger.

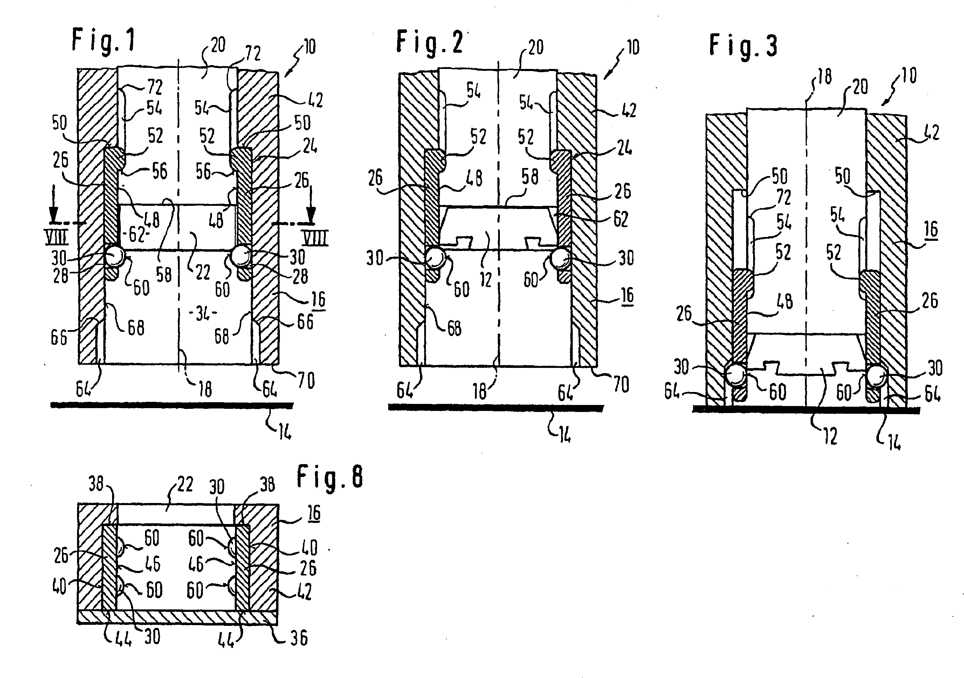

In den Fig. 1 bis 7 ist eine erfindungsgemäße Setzeinrichtung 10 gezeigt, welche zum Einsetzen eines Fügeteils in Form eines Mutterelements 12 in ein Blechteil 14 benutzt wird.

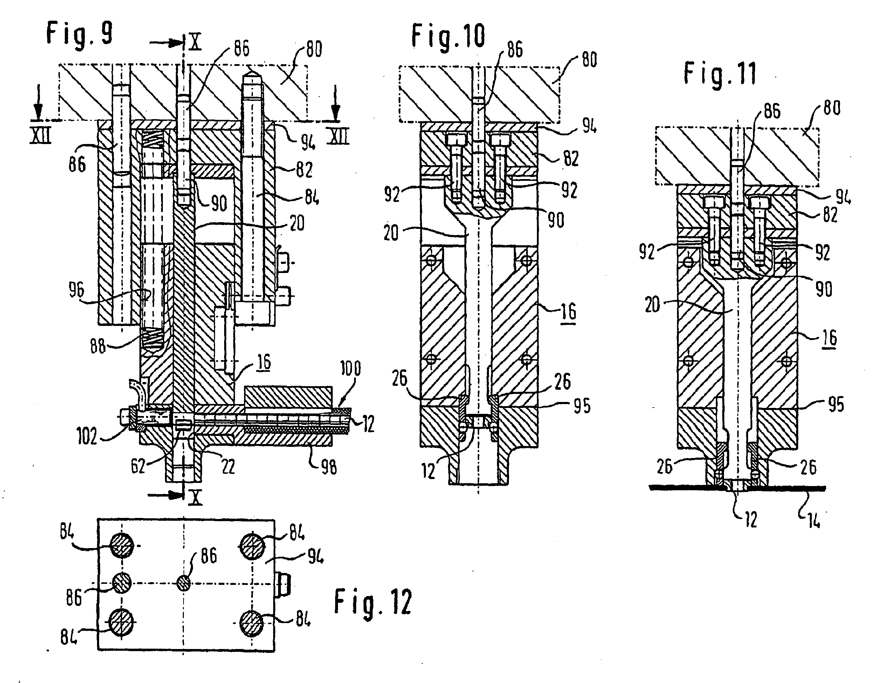

Solche Setzeinrichtungen werden üblicherweise in einer Presse eingesetzt, welche beispielsweise nicht nur die Setzkraft für das Einsetzen des Fügeteils bereitstellt, sondern auch zur gleichzeitigen Formgebung eines Blechteils dient. Eine detaillierte Beschreibung einer möglichen Anwendung der Setzeinrichtung 10 in einer Presse wird später anhand der Fig. 9 bis 12 gegeben. Vorerst läßt sich die Funktion der Setzeinrichtung 10 anhand der Fig. 1 bis 8 erläutern.

Wie aus Fig. 1 ersichtlich ist, weist die Setzeinrichtung 10 ein Führungsstück 16 sowie einen innerhalb des Führungsstücks 16 in axialer Richtung 18 verschiebbar angeordneten Stempel 20 auf.

In diesem Beispiel ist, wie insbesondere aus Fig. 8 ersichtlich ist, sowohl das Führungsstück wie auch der Stempel im Querschnitt viereckig, wobei eine Beladeöffnung 22 sich in der breiteren Seitenwand des Führungsstücks 16 befindet.

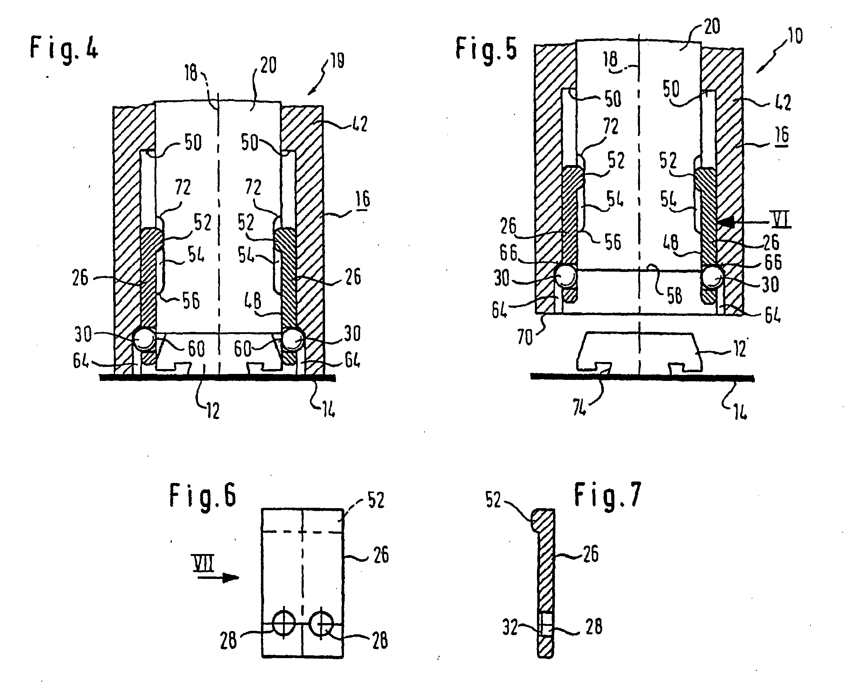

Links und rechts vom Stempel 20 sind zwei gemeinsam eine Trägereinrichtung 24 bildende Haltefinger 26 angeordnet, welche, wie in der Seitenansicht von Fig. 6 ersichtlich, jeweils zwei Bohrungen 28 aufweisen, in denen, wie in den Fig. 1 bis 5 und 8 gezeigt, jeweilige Kugeln 30 verschiebbar gelagert sind. Wie in Fig. 7 dargestellt, sind die inneren Enden 32 der Bohrungen 28 jeweils verengt ausgebildet, damit die verengten öffnungen 32 einen Durchmesser aufweisen, welcher kleiner ist als der Durchmesser der Kugeln 30, so daß diese nicht aus den Haltefingern heraus und in den Raum 34 unterhalb des Stempels 20 fallen können.

Wie aus der Schnittzeichnung der Fig. 8 hervorgeht, werden die Haltefinger 26 an drei Seiten vom Führungsstück 16 geführt, wobei das Führungsstück 16 mit einem abnehmbaren Deckel 36 versehen ist, um die Herstellung und den Zusammenbau der Anordnung zu erleichtern. Somit werden die Haltefinger 26 an ihren beiden Seitenflächen 38 und 40 vom Körper 42 des Führungsstücks und an ihren dritten Seiten 44 vom Deckel 36 geführt. An ihren inneren Seiten 46 liegen die Haltefinger teilweise an den Seitenflächen 48 des Stempels an und werden hier ebenfalls geführt. Mit anderen Worten bildet jede Seitenwand 48 des Stempels mit dem Körper 42 bzw. Deckel 36 des Führungsstücks einen im Querschnitt viereckige Führungsraum für die Haltefinger 26.

Oberhalb der Haltefinger 26 weist das Führungsstück 16 zwei innere Schultern 50 auf, welche jeweilige Anschläge für die Haltefinger 26 bilden und somit die axiale Lage der Haltefinger nach oben begrenzen. Die Haltefinger 26 weisen wiederum an ihren oberen Enden nach innen ragende Nasen 52 auf, welche in jeweilige längliche seitliche Ausnehmungen 54 des Stempels hineinragen, wobei diese seitlichen Ausnehmungen 54 in der Fig. 1 an ihren unteren Enden 56 in Berührung mit den Nasen 52 stehen.

Wie nachfolgend anhand der Fig. 9 bis 12 näher erläutert wird, ist das Führungsstück 16 nach unten vorgespannt, während der Stempel 20 an seinem oberen Ende befestigt ist. Aufgrund dieser Vorspannung des Führungsstücks 16 nach unten werden die Nasen 52 der Haltefinger zwischen den Anschlägen 50 und den unteren Enden 56 der Ausnehmungen 54 des Stempels eingeklemmt. Hierdurch wird das untere Stirnende 58 des Stempels in einem vorgegebenen Abstand von den durch die gerundeten Flächen der Kugeln 30 gebildeten Haltenasen 60 gehalten, wodurch ein Aufnahmeraum 62 zur Aufnahme eines Fügeteils 12 geschaffen wird.

Im unteren Bereich des Führungsstücks 16 befinden sich zwei Erweiterungen 64, welche über jeweilige gerundete Schultern 66 in die innere Seitenwand 68 des Führungsstücks 60 übergehen.

Ausgehend von der Lage der Fig. 1 kann ein einziges Element hier in Form eines Fügeteils 12 seitlich durch die Öffnung 22 in den Raum 62 eingeführt werden, wie aus Fig. 2 ersichtlich ist. Das Element 12 ist in diesem Ausführungsbeispiel eine sogenannte Stanz- und Nietmutter, beispielsweise von der Firma Profil, welche in der Draufsicht einen rechteckigen Querschnitt aufweist. Das nicht gezeigte Gewinde liegt koaxial zur Längsachse 18 der Setzeinrichtung 10 bzw. des Stempels 20.

Die Unterseite des Elements 12 wird somit auf vier Kugeln abgestützt und ist daher sicher gegen Kippbewegungen gehalten. Beim Betrieb der Setzeinrichtung wird das Führungsstück mit dem Stempel zunächst nach unten gedrückt, bis das untere Ende 70 des Führungsstücks das Blechteil 14 berührt und dieses fest gegen ein unteres Werkzeug einer Presse drückt. Bei der weiteren Schließbewegung der Presse wird der Stempel dann gegenüber dem Führungsstück 16 vorgeschoben, d.h. das Führungsstück weicht gegenüber dem Stempel zurück und der Stempel drückt das Element 12 nach unten, wie in Fig. 3 gezeigt. Da die Kugeln 30 seitlich nicht ausweichen können und die Kraft des Stempels über das Element und die durch die Kugeln 30 gebildeten Haltenasen 60 auf die Haltefinger 26 wirkt, werden diese synchron mit dem Stempel 20 nach unten bewegt, und zwar bis die Stellung gemäß Fig. 3 erreicht ist.

In dieser Stellung gelangen die Kugeln 60 in den Bereich der seitlichen Erweiterungen 64 des Führungsstücks und können seitlich ausweichen, und zwar um einen Abstand, der ausreicht, das Element 12 freizugeben, d.h. es wird eine Freigabeposition erreicht, in der es dem Stempel 20 gestattet ist, das Element 12 weiter nach unten in Richtung des Blechteils 14 zu drücken. Dabei berühren die unteren Enden der Haltefinger 26 das Blechteil 14 nicht, und sie können es somit überhaupt nicht markieren. Aber auch dann, wenn die Haltefinger etwas länger ausgeführt wären als in den Fig. 1 bis 8 dargestellt oder sie sich aus irgendeinem Grund weiter nach unten bewegen und das Blechteil berühren würden, würde keine nennenswerte nach unten gerichtete Kraft auf die Haltefinger der Freigabeposition ausgeübt werden, so daß eine etwaige entstehende Flächenpressung an den unteren Enden der Haltefinger auf dem Blechteil 14 so gering ist, daß auch hier eine Markierung des Blechteils nicht zu befürchten ist.

Aus Fig. 3 ist zu erkennen, daß während der Absetzphase des Elements die Nasen 52 der Haltefinger 26 entlang den länglichen Ausnehmungen bzw. Aussparungen 54 des Stempels gleiten, d.h. es tritt in diesem Stadium eine relative axiale Bewegung zwischen den Haltefingern 26 und dem Stempel 20 auf. Solange die Aussparungen 54 eine ausreichende Länge haben, können die Nasen 52 die obere Begrenzung 72 der Aussparungen 54 nicht erreichen, und es können, wie oben erläutert, keine nennenswerten nach unten gerichteten Kräfte auf die Klemmfinger ausgeübt werden.

Nach dem Einsetzen des Mutterelements in das Blechteil öffnet sich die Presse wieder und hebt den Stempel 20 und das Führungsstück 16 vom Blechteil 14 weg, wie in Fig. 5 gezeigt. Die auf das Führungsstück wirkende Vorspannkraft drückt die Kugeln wieder nach innen, und der Stempel 20, die Haltefinger 26 und das Führungsstück 16 kehren in die Ausgangsposition von Fig. 1 zurück.

Fig. 5 ist insofern nicht ganz richtig gezeichnet, als bei Fügeteilen in Form einer Stanzmutter das Blechteil 14 durch das Stanzteil 74 der Stanzmutter und durch die Zusammenarbeit mit einer unterhalb des Blechteils 14 angeordneten, hier nicht gezeigten Matrize durchlocht wird, wobei die Klemmkraft zwischen dem Stempel und der Matrize auch für das Vernieten des Blechteiles mit der Stanzmutter sorgt. Dieses Stanz- und Nietverfahren ist aber bekannt und braucht daher hier nicht näher erläutert zu werden. Man kann aber die Ausführung gemäß Fig. 5 so betrachten, als würde sie lediglich einen Absetzvorgang zeigen, bei dem die Setzeinrichtung lediglich eine Führungsfunktion hat und daher auch als eine Führungsseinrichtung betrachtet werden kann.

Die Fig. 9 bis 12 zeigen, wie eine Setzeinrichtung 10 der in den Fig. 1 bis 8 gezeigten Art beim Einbau in eine Presse aussieht. Dabei stellt das Bezugszeichen 80 das obere Werkzeug der Presse dar. Das Führungsstück 16 ist axial verschiebbar innerhalb eines Befestigungsgehäuses geführt, wobei das Befestigungsgehäuse über vier Schrauben 84 und zwei Paßstifte 86 am oberen Werkzeug 80 der Presse befestigt ist. Das Führungsstück 16 wird nach unten vom Werkzeug 80 weg mittels einer oder mehrerer Federn 88 vorgespannt. Der Stempel 20 ist mittels eines weiteren Paßstifts 90 bezüglich des Befestigungsgehäuses 82 zentriert, damit die mittlere Längsachse des Stempels mit der mittleren Längsachse der Setzeinrichtung insgesamt fluchtet. Der Stempel 20 ist in seinem oberen Bereich, wie in Fig. 10 gezeigt, erweitert und am Befestigungsgehäuse 82 mittels zweier Schrauben 92 befestigt. Die Platte 94 bildet einen Deckel für das Befestigungsgehäuse 82 und zugleich ein Widerlager für das eine Ende der Schraubendruckfeder 88, wobei das andere Ende der Feder in eine Bohrung 96 des Führungsstücks eingreift und am Ende dieser Bohrung abgestützt ist. Obwohl hier nur eine Feder gezeigt ist, können mehrere Feder oder andere Federmittel wie beispielsweise Preßluft zur Anwendung gelangen.

Wie in Fig. 10 und 11 gezeigt, sind das untere Ende des Stempels, das Führungsstück und die Haltefinger im Prinzip so ausgebildet wie es in Fig. 1 bis 8 dargestellt ist; das Führungsstück ist lediglich mehrteilig ausgebildet, so daß die unteren und oberen Teile an einerTrennebene 96 aneinandergefügtsind, was die Bearbeitung der einzelnen Teile erleichtert.

Aus Fig. 9 ist zu erkennen, wie das Mundstück 98 einer schlauchförmigen Zuführeinrichtung 100 in die Einführöffnung 22 des Führungsstücks hineinragt, damit die jeweiligen Elemente eines nach dem anderen in den Aufnahmeraum 62 eingeführt werden können. Dieser Aufnahmeraum 62 ist so bemessen, daß lediglich ein Element dort Platz hat.

Dem Mundstück 98 gegenüber ist eine Detektoreinrichtung 102 angeordnet, die hier als Näherungssensor ausgebildet ist und dazu verwendet wird, zu ermitteln, ob sich ein Element 12 im Aufnahmeraum 62 befindet. Der Arbeitszyklus der Presse kann nur dann ausgelöst werden, wenn ein Mutterelement hier vorhanden ist.

Fig. 11 zeigt, wie das Führungsstück 16 beim Schließen der Presse, d.h. bei nach unten gerichteter Bewegung des oberen Werkzeugs 80 gegenüber dem Befestigungsgehäuse 82 zurückweicht und der Stempel das Mutterelement 12 mit dem Blechteil 14 verbindet.

Die Haltefinger 26 verhalten sich bei dieser Ausführungsform genauso, wie es im Zusammenhang mit der Ausführungsform der Fig. 1 bis 8 beschrieben wurde.

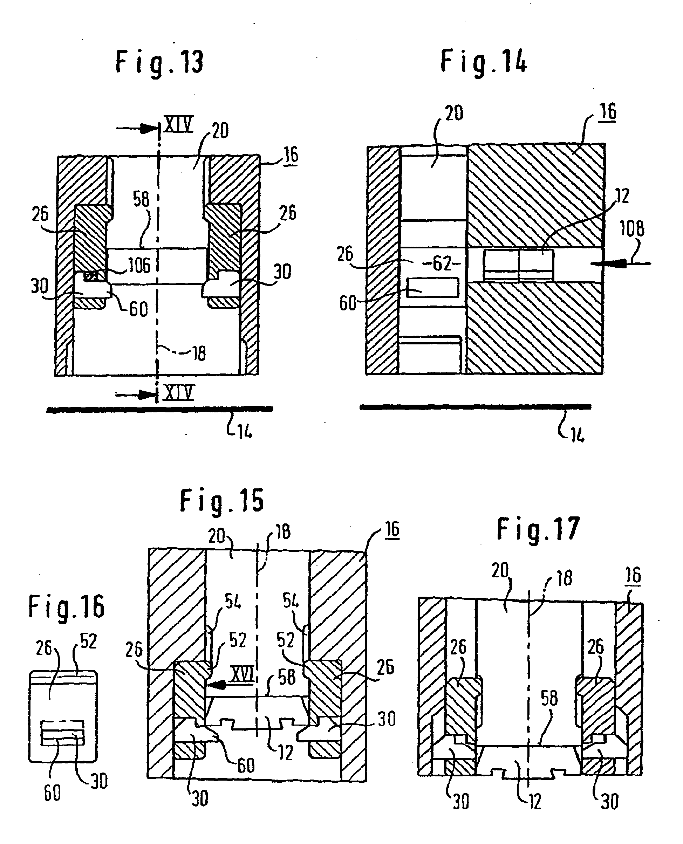

Fig. 13 entspricht der Darstellung von Fig. 1, nur werden hier die die Haftenasen 60 bildenden Glieder 30 nicht durch Kugeln, sondern durch prismatische Führungsstücke gebildet. Diese sind an der Berührungsfläche mit dem Element (in Fig. 13 nicht gezeigt) gerundet ausgebildet, damit sie beim Erreichen der Freigabeposition entsprechend Fig. 4 sanft zurückweichen können.

Es ist ersichtlich, daß die Ausführung gemäß Fig. 13 auf die gleiche Art und Weise funktioniert wie die Ausführungsformen der Fig. 1 bis 8 bzw. 9 bis 12. Hier werden, wie auch in den anderen Figuren, für Teile, welche die gleiche oder eine ähnliche Funktion haben, die gleichen Bezugszeichen verwendet. Da die Arbeitsweisen der verschiedenen Ausführungsformen alle gleich sind, kann auf eine detaillierte Beschreibung der jeweiligen Arbeitsweise für jede einzelne Ausführung verzichtet werden.

Die Fig. 14 zeigt einen schematischen Querschnitt XIV-XIV der Fig. 13, aus dem die Bewegung 108 der einzelnen Elemente 12 durch den Zuführkanal in Richtung des Aufnahmeraums 62 ersichtlich ist.

Das Bezugszeichen 106 deutet auf eine Feder hin, welche in den Haltefingern zum Zurückstellen der Glieder 30 verwendet werden kann. Wenn eine solche Rückstellfeder verwendet wird, dann kann sie beispielsweise in Form eines Polyurethankissens realisiert werden. Wenn eine derartige Feder gewählt wird, dann wird für jedes Glied eine jeweilige Feder vorgesehen.

Die Haltenasen 60 der prismatischen Führungsstücke 30 von Fig. 13 stellen sich in der Ansicht gemäß Fig. 14 rechteckig dar, was den Vorteil hat, daß eine ausgedehnte Abstützfläche für die Elemente 12 vorhanden ist.

Fig. 15 zeigt eine alternative Ausgestaltung eines prismatischen Führungsstücks 30, wobei auch in dieser Figur wie in den weiteren Fig. 16 bis 17 die gleichen Bezugszeichen wie bisher verwendet werden und die Funktionsbeschreibung der bisherigen Figuren auch für diese Ausführungsform gilt und daher nicht wiederholt werden muß.

Fig. 17 zeigt eine weitere Variante, bei der die Haltefinger 26 in der Freigabeposition bündig mit dem unteren Ende des Führungsstücks 16 sind, d.h. das Blechteil (nicht gezeigt) berühren. Auch hier liegt eine ausgedehnte Fläche zur Abstützung des jeweiligen Elements 12 vor.

Obwohl die bisherige Beschreibung lediglich im Zusammenhang mit in Draufsicht rechteckigen Mutterelementen erfolgt ist, liegt hier keine Beschränkung vor, sondern die Führungs- und/oder Setzeinrichtung der vorliegenden Erfindung kann auch mit anders gestalteten Gegenständen wie beispielsweise runden, ovalen, polygonalen oder ekkigen Gegenständen verwendet werden.

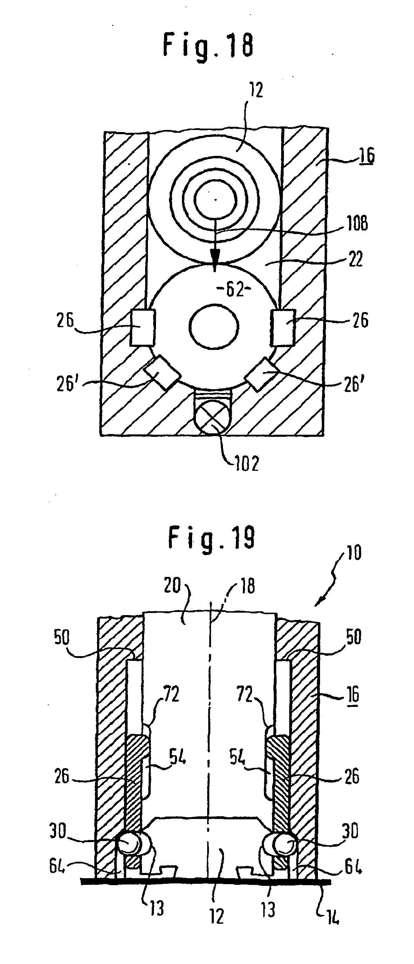

Fig. 18 zeigt einen Querschnitt durch das Führungsstück 16 einer Führungs- und/oder Setzeinrichtung 10 in Höhe des Aufnahmeraumes 62, wobei dieser Aufnahmeraum hier zur Aufnahme von zylindrischen Elementen 12 im wesentlichen zylindrisch ausgebildet ist. Der Stempel ist von entsprechender zylindrischer Gestalt.

In diesem Beispiel sind wiederum zwei Haltefinger 26 gezeigt, die so ausgebildet werden können, wie im Zusammenhang mit den bisherigen Ausführungsformen erörtert.

Die Detektoreinrichtung 102 liegt der Einführöffnung 22 für Elemente 12 gegenüber und dient wie bisher dazu, zu ermitteln, wenn ein Element 12 im Aufnahmeraum 62 vorhanden ist.

Die Bezugszeichen 26' zeigen zwei zusätzliche Haltefinger, welche wahlweise mit den Haltefingern 26 verwendet werden können und genauso wie diese ausgebildet sein können. Durch das Vorsehen von in diesem Beispiel vier Haltefingern wird das Element 12 an mehreren Stellen abgestützt und daher äußerst kippfrei gehalten.

Es ist auch eine Anordnung denkbar, bei der drei Haltefinger vorgesehen sind. In diesem Falle muß an einer Stelle zwischen zwei benachbarten Haltefingern eine ausreichend große Einführöffnung 22 vorgesehen werden, um die entsprechenden Elemente in den Aufnahmeraum 62 einführen zu können.

Beispielsweise könnte anstelle der Detektoreinrichtung 102 ein dritter Haltefinger vorgesehen werden. Die Haltefinger 26' würden dann entfallen, bzw. es könnte einer der Haltefinger 26' durch eine Detektoreinrichtung 102 ersetzt werden. Beim Vorhandensein von drei Haltefingern können diese in Winkelabständen von jeweils etwa 120° angeordnet werden, sofern die zwei Haltefinger, welche an der Einführöffnung 22 liegen, teilweise ausgeschnitten sind, um die Einführung eines Elements in den Aufnahmeraum 62 zu gestatten.

Im Prinzip gibt es keine Beschränkung hinsichtlich der Anzahl der verwendeten Haltefinger, solange das jeweilige Element kippfrei abgestützt werden kann.

Es ist nicht unbedingt erforderlich, die Trägereinrichtung für die Haltenasen in Form von Haltefingern zu realisieren. Statt dessen wäre es durchaus möglich, eine Trägereinrichtung in Form einer Hülse zu verwenden, und zwar mit mindestens zwei seitlich verschiebbaren Gliedern, an denen entsprechende Haltenasen ausgebildet sind. Bei der Verwendung einer solchen Hülse muß diese im Bereich der Einführöffnung eine entsprechende Ausnehmung aufweisen, damit die Elemente durch die Seitenwand der Hülse hindurch in den Aufnahmeraum 62 eingeführt werden können. Es ist bei diesem Beispiel auch günstig eine weitere Öffnung in der Hülse vorzusehen, damit die Detektoreinrichtung das jeweilige Element erfassen kann.

Bei Verwendung einer Hülse, welche insbesondere bei einerzylindrischen Ausbildung des Stempels in Frage käme, können die Anschläge zur Begrenzung der axialen Lage der Hülse durch Stifte oder Schraubstifte gebildet werden, die in der Hülse angeordnet sind und auf diese Weise für die erforderliche Winkelstellung der Hülse in Bezug auf das Führungsstück bzw. den Stempel sorgen. Beispielsweise könnten die Schultern 50 der Ausführung gemäß Fig. 1 entweder durch eine Ringschulter des Führungsstücks 16 oder durch einen in das Führungsstück einschraubbaren Ring gebildet werden, oder sie könnten durch die Oberfläche eines oder mehrerer Stifte gebildet werden, die an gewählten Winkelstellen in der Wandung des Führungsstücks angeordnet werden. Die Stifte könnten auch in die die Trägereinrichtung bildende Hülse eingesetzt werden und dann in entsprechende Langlöcher des Führungsstücks hineinragen.

Auch die Nasen 52 der bisher beschriebenen Haltefinger könnten bei der Verwendung einer Hülse als Trägereinrichtung für die Haltenasen durch Stifte gebildet werden, die entweder an geeigneten Winkelstellen im Stempel oder an geeigneten Winkelstellen in der Hülse befestigt werden und in im jeweils anderen Teil ausgebildeten Aussparungen oder Langlöchern gleiten, wobei die Enden der Aussparungen bzw. Langlöcher die erforderlichen Anschläge bilden.

Auch bei Verwendung einer Trägereinrichtung in Form von Haltefingern können die erforderlichen Anschläge sinngemäß durch zusammenwirkende Stifte und Aussparungen bzw. Langlöcher gebildet werden.

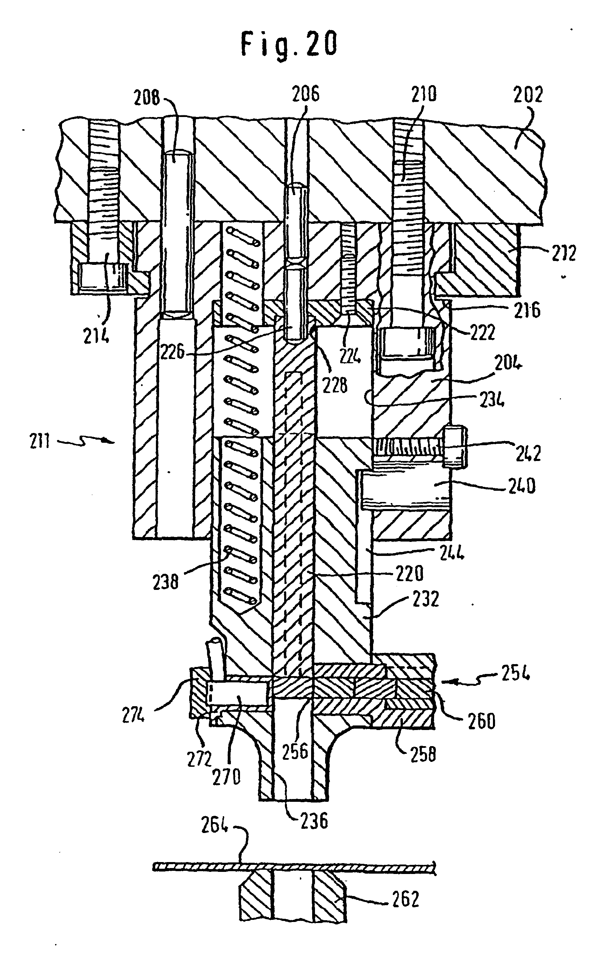

Die Führungs- und / oder Setzeinrichtung gemäß der weiteren erfindungsgemäßen Lösung ist allgemein bei 211 in Figur 20 gezeigt. Die Setzeinrichtung 211 ist an einer Presse angebracht, die allgemein bei 202 gezeigt ist. Die Presse 202 kann durch einen herkömmlichen Aktuator, der nicht dargestellt ist, auf- und abbewegt werden. Die Setzeinrichtung 211 weist ein Gehäuse 204 auf, das bezüglich der Presse 202 durch Zentrierungsstifte 206 und 208 positioniert und gegen die untere Seite der Presse 202 mittels Schrauben 210 oder Klemmhaken 212 festgezogen ist. Die Klemmhaken 212 weisen Vorsprünge auf, die in Quernuten 216 des Gehäuses eingreifen und mittels Schrauben 214 an der Presse 202 befestigt sind.

Ein Stempel 220 ist am Gehäuse 204 durch eine Druckplatte 222 sicher befestigt, die zwischen dem Stempel und dem Gehäuse 204 angeordnet ist. Die Druckplatte 222 ist mittels Schrauben 224 am Gehäuse 204 befestigt. Ein Zentrierungsstift226 ist in einer Bohrung in der Druckplatte 222 aufgenommen und erstrecktsich hinein in eine Bohrung des Gehäuses 204 benachbart dem Zentrierungsstift 206. Der Zentrierungsstift 226 sorgt für eine relative Positionierung zwischen dem Gehäuse 204 und dem Stempel 220 und der Druckplatte 222.

Ein Führungsstück oder Nasenstück 232 ist in einer Öffnung 234 angebracht, die im Gehäuse 204 angeordnet ist. Das Führungsstück 232 ist ausgebildet, um sich longitudinal bezüglich des Gehäuses 204 hin- und herzubewegen. Das Führungsstück 232 definiert einen inneren Stempeldurchgang 236. Der Stempel 220 erstreckt sich in den Durchgang 236 hinein und gleitet im Stempeldurchgang 236 während einer relativen Positionsverschiebung zwischen dem Führungsstück 232 und dem Gehäuse 204.

Das Führungsstück 232 wird durch vier Schraubendruckfedern 238 unter Spannung gehalten, die um den Stempel 220 herum innerhalb der Führungsöffnung 234 angeordnet sind. In der offenbarten Ausführungsform erstrekken sich die Federn 238 zwischen dem Führungsstück 232 und der Presse 202. Spannung wird gegen das Führungsstück 232 in einer weg von der Presse 202 weisenden Richtung aufgebracht, wodurch das Führungsstück in die Richtung des Werkstücks oder der Tafel 264 gezwungen wird. Ein Verriegelungsschlüssel 240 begrenzt die Nach-Außen-Bewegung des Führungsstücks 232. Der Schlüssel 240 wird durch eine Verriegelungsschraube 242, die sich in das Gehäuse 204 hinein erstreckt, an Ort und Stelle gehalten. Der Schlüssel 240 weist einen Vorsprung auf, der sich hinein in einen Schlitz 244 im Führungsstück 232 erstreckt.

In dem offenbarten Aspekt der Erfindung weisen der Stempel 220 und der Stempeldurchgang 236 denselben rechtwinkeligen Querschnitt auf, und das Führungsstück 232 und die Führungsöffnungen 234 weisen denselben rechtwinkeligen Querschnitt auf. Somit ist eine präzise Steuerung und Positionierung des Stempels 220 relativ zum Führungsstück 232 sowie des Führungsstücks 232 relativ zum Gehäuse 234 gewährleistet. Gleichzeitig wird durch die Wahl dieser Querschnittsform eine einfache Drehverriegelung des Stempels 220 und des Führungsstücks 232 erzielt.

Befestigungs- bzw. Fügeelemente 260 werden in den Stempeldurchgang 236 durch eine herkömmliche Zufuhreinrichtung 254 eingeführt, die nicht im Detail gezeigt ist. Die Zufuhreinrichtung 254 weist eine Einlaßzuleitung 258 mit einer Einlaßöffnung 256 auf, die sich mit dem Führungsstück 232 lateral schneidet. Die Einlaßzuleitung 258 speist Fügeelemente 260 in den Stempeldurchgang 236 durch die laterale Einlaßöffnung 256 ein. Die Fügeelemente 260 werden sequentiell in den Durchgang 236 benachbart oder unterhalb des Stempels 220 geschoben, welcher dann die einzelnen Fügeelemente 260 in die Richtung eines Werkstücks treibt, das als eine Blechtafel 264 offenbart ist.

Eine stationäre untere Matrize 262 ist unterhalb des Führungsstücks 232 angeordnet. Die Blechtafel 264 ist auf der Matrize 262 zwischen der Matrize 262 und dem Stempel 220 positioniert. Die Fügeelemente 260 werden dann in die Blechtafel gepreßtwährend sich die Presse 202 schließt. Während sich die Presse schließt, wird das Führungsstück 232 relativ zum Gehäuse 204 und relativ zum Stempel 220 verschoben, so daß der Stempel 220 das Fügeelement 260 von seiner Position im Stempeldurchgang 236 angrenzend an die Einlaßöffnung 256 aus nach unten durch den Stempeldurchgang hindurch zur Tafel 264 treibt. Basierend auf der einfachen Drehverriegelungssteuerung zwischen dem Führungsstück 232 und der Führungsöffnung 234 sowie zwischen dem Stempel 220 und dem Durchgang 236 wird eine genaue Ausrichtung des Stempeldurchgangs 236 an der stationären unteren Matrize 262 erzielt. Dies ist wichtig, wenn die verbundenen Teile, wie beispielsweise rechtwinkelige Pierce- bzw. Stanz- oder Clinch-Muttem, in das Blech 264 in genauer ausgerichteter Beziehung zur Tafel gepreßt werden müssen.

Vorzugsweise gleiten die Teile gegeneinander. Bevorzugt ertordern die Teile keine Schmierung. Daherwerden das Gehäuse 204 und das Führungsstück 232 vorzugsweise aus Bronze hergestellt, während der Stempel 220 aus Werkzeugstahl hergestellt wird.

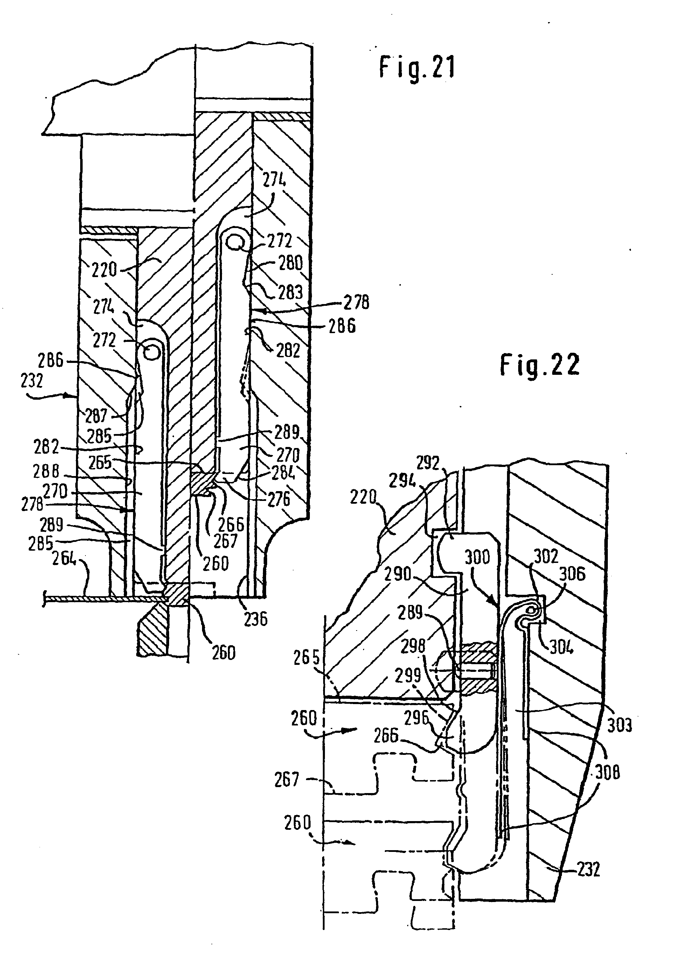

In Figur 21 sind die Fügeelement-Steuerhaltefinger 270 dargestellt. In der bevorzugten Ausführungsform sind zwei Haltefinger 270 so positioniert, daß sie sich allgemein mit dem Eingangsweg der durch die Einlaßöffnung 256 eintretenden Fügeelemente schneiden. Die Haltefinger 270 sind schwenkbar am Stempel 220 durch Schwenkstifte 272 angebracht. Der Stempel 220 weist Schlitze 274 zur Aufnahme der Haltefinger 270 auf, um die Gesamtgröße des Stempels 220 und des Führungsstücks 232 zu reduzieren. Die Steuerhaltefinger 270 werden bezüglich des Stempels 220 verschwenkt, um in und außer Eingriff mit dem Fügeelement 260 zu gelangen. Das freie Ende 276 jedes Haltefingers 270 ist so konfiguriert, daß es zu einer versetzten Fläche 266 auf der Seite des Fügeelementes 260 paßt. Die versetzte Fläche 266 wird nachstehend detaillierter beschrieben.

Die Schwenkbewegung der Haltefinger 270 wird durch passende Nockenflächen auf den Haltefingern 270 und der inneren Wand des Führungsstücks 232 gesteuert. Jeder der Haltefinger 270 weist eine profilierte Kante 278 gegenüber dem Fügeelement 260 auf. Die Kante 278 weist einen Versatz 280 sowie eine Führungs- oder Steuerfläche 282 auf, die durch eine Übergangsfläche 283 miteinander verbunden sind. Wie offenbart, endet die Steuerfläche 282 in einerwinkeligen Fläche 284. Die innere Wand des Führungsstücks ist mit einer Steuerfläche 286 und einem Versatz 288 profiliert, die durch eine Übergangsfläche 287 verbunden sind. In der bevorzugten Ausführungsform stellen die Flächen 286, 287 und 288 den Grund von Schlitzen dar, die in die innere Wand des Führungsstücks 232 geschnitten sind, um die Breite des Führungsstücks zu reduzieren. Die gegenüberliegende Kante des Haltefingers 270 umfaßt einen Anschlag 289, der das Ausmaß der nach innen gerichteten Schwenkbewegung des Haltefingers 270 steuert.

In Betrieb, wenn sich der Stempel 220 in der rechts in Figur 21 dargestellten Position befindet, wird ein Fügeelement 260 in den Durchgang 236 durch die Einlaßöffnung 256 eingeführt. In Figur 21 liegt die Einlaßöffnung 256 im allgemeinen senkrecht zu der Figur und ist daher nicht sichtbar. Es ist zu erkennen, daß sich die Steuerflächen 282 und 286 in Kontakt befinden, und das freie Ende 276 ist in die versetzte Fläche 266 des Fügeelementes 260 eingesetzt. In dieser Position steuern die Haltefinger 270 die Position des Fügeelementes bezüglich des Stempels 220 und der Tafel 264. Der Anschlag 289 verhindert, daß sich die Haltefinger 270 gegen das Fügeelement 260 pressen. Dies ist wichtig, da das Fügeelement 260 in den Durchgang 236 zwischen den Haltefingern 270 frei eingeführt werden muß. Der Anschlag 289 gestattet das einfache Einsetzen des Fügeelementes 260 zwischen den freien Enden 276 der Haltefinger270, gestattet jedoch noch einen ausreichenden Eingriff zwischen den Haftefingern 270 und dem Fügeelement 260, um das Fügeelement während seiner Bewegung zur Tafel und die Anbringung hindurch zu stützen und zu steuern. Während die Flächen 282 und 286 sich in Kontakt befinden, wird das Fügeelement 260 durch die Haltefinger 270 gesteuert während es sich bezüglich des Führungsstücks 232 bewegt. Die Steuerung wird durch die Flächen 282 und 286 erzielt, die gegeneinander gleiten und den Eingriff zwischen dem freien Ende 276 und der versetzten Fläche 266 des Fügeelementes 260 aufrechterhalten.

Gemäß der linken Seite von Figur 21 ist das Fügeelement 260 an der Tafel 264 angebracht worden. Die Haltefinger 270 haben die Position des Fügeelementes 260 während seiner gesamten Bewegung von der Einführung des Fügeelementes 260 in den Durchgang 236 und die Anbringung an der Tafel 264 hindurch gesteuert. Es ist zu erkennen, daß sich die Steuerflächen 282 und 286 nicht mehr in Eingriff befinden. Es ist ein Zwischenraum 285 zwischen der Steuerfläche 282 und dem Versatzabschnitt 288 des Führungsstücks 232 sowie zwischen dem Versatz 280 des Haltefingers 270 und der Steuerfläche 286 des Führungsstücks 232 vorhanden. Dieser Zwischenraum 285 gestattet es den Haltefingern 270, bezüglich des Stempels 220 und des Fügeelementes 260 zu verschwenken. Um das Verschwenken des Haltefingers 270 zu erleichtern, ist der Haltefinger 270 um den Schwenkstift 272 herum abgerundet.

Während sich die Presse öffnet, wird der Stempel 220 vom Fügeelement 260 weggezogen. Diese Bewegung veranlaßt die freien Enden 276 der Haltefinger 270, nockenartig gegen die versetzte Fläche 266 zu wirken und die Haltefinger 270 in den Zwischenraum 285 weg vom Fügeelement 260 zu schwenken, um das Fügeelement 260 freizugeben. Während die Presse 202 fortfährt sich zu öffnen, wirken die Übergangsflächen 283 und 287 nockenartig gegeneinander, um die Steuerflächen 282 und 286 sanft in Gleitkontakt zu bringen. Wenn die Presse ihre offene Position erreicht, führt die Zufuhreinrichtung ein weiteres Fügeelement 260 in den Stempeldurchgang 236 zwischen den geschlossenen Haltefingern 270 für einen weiteren Anbringungszyklus ein.

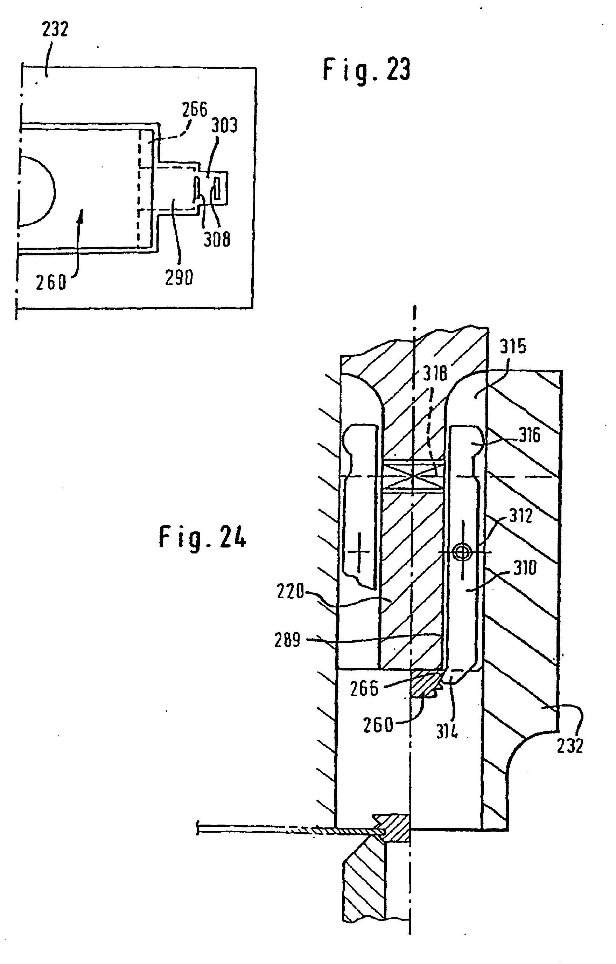

Wie vorstehend diskutiert, weist das Fügeelement 260 eine versetzte Fläche 266 auf, die zu dem freien Ende 276 der Haltefinger 270 paßt. Wie dargestellt, befindet sich die versetzte Fläche 266 zwischen dem Oberteil 265 und dem unteren oder Anbringungsende 267 des Fügeelementes 260. Durch Positionieren der versetzten Fläche 266 oberhalb des Anbringungsendes 267 können die Haltefinger 270 die Position des Fügeelementes 260 während seines gesamten Laufweges steuern, wie vorstehend diskutiert. Die versetzte Fläche 266 ist vorzugsweise eine laterale Nut, die sich über die Breite des Fügeelementes 260 erstreckt (siehe Figur 23). Die versetzte Fläche könnte viele verschiedene Formen annehmen, obwohl eine konkave Nut in manchen Anwendungen vorzuziehen sein wird. Sie könnte eine Kerbe, ein Flansch, eine leichte Vertiefung bzw. ein Eindruck, ein Vorsprung, eine Rippe oder ein Rücken, etc. sein. Für den Fachmann ist ersichtlich, daß das freie Ende 276 der Haltefinger so geformt wäre, daß es die Form der versetzten Fläche 266 komplementär ergänzen würde.

In Figur 22 ist eine weitere Ausführungsform gemäß dem vorliegenden Aspekt der Erfindung gezeigt. In dieser Ausführungsform sind die Haltefinger 290 am Stempel 220 durch den Eingriff eines Vorsprungs 292 innerhalb einer im Stempel 220 ausgebildeten Ausnehmung 294 befestigt. Wie dargestellt, ist das freie Ende des Vorsprungs 292 abgerundet, um das Verschwenken des Haltefingers 290 zu erleichtern. Der Haftefinger290 weist ein freies Ende mit einer Nockenfläche 298 auf, die so ausgebildet ist, daß sie nockenartig gegen die Nockenfläche 299 der versetzten Fläche 266 des Fügeelementes 260 wirkt. Wie in der vorherigen Ausführungsform weist der Haltefinger 290 einen Anschlag 289 auf, um das Ausmaß des Eingriffs zwischen dem Haltefinger 290 und dem Fügeelement 260 zu begrenzen. Wie in Figur 22 in durchgezogenen Linien gezeigt, ist das Fügeelement 260 gerade zwischen die Haltefinger 290 eingeführt worden, und zwischen den Haltefingern 290 und dem Fügeelement 260 ist ein Raum vorhanden.

Anders als die vorherige Ausführungsform verwendet diese Ausführungsform ein Vorspannmittel 300, um den Haltefinger 290 in die Richtung des Fügeelementes 260 zu zwingen. Das Vorspannmittel 300 ist als eine Feder mit einem Kopf 302 dargestellt. Die Feder 300 ist in einem Schlitz 303 positioniert, der im Führungsstück 232 ausgebildet ist, und der Kopf 302 ist in eine Ausnehmung 304 im Führungsstück 232 eingesetzt. Ein Stift 306 erstreckt sich durch den Kopf hindurch, um die Feder 300 während des Zusammenbaus an Ort und Stelle zu haften. Die Feder umfaßt entgegengesetzte Beine 308, die eine Vorspannung gegen den Haltefinger 290 und das Führungsstück 232 bewirken, um den Haltefinger 290 in die Richtung des Stempels 220 zu zwingen.

In Betrieb gleitet der Haltefinger 290 längs des Beins 308 und ist in das Fügeelement 260 hinein vorgespannt. Die durchgezogenen Linien von Figur 22 zeigen die offene Position der Presse 202 mit dem zwischen die Haltefinger 290 eingeführten Fügeelement 260. Die Phantomlinien veranschaulichen die Position der Haltefinger 290 und der Feder 300, wenn das Fügeelement 260 angebracht ist. Es ist zu erkennen, daß, während sich die Presse öffnet, die Nockenfläche 298 nockenartig gegen die Nockenfläche 299 wirkt und die Haltefinger290 gegen die Vorspannung der Feder 300 verschwenkt, wodurch das Fügeelement 260 freigegeben wird.

Wie in Figur23 zu erkennen, ist das Fügeelement260 von den Wänden des Führungsstücks 232 beabstandet. Für den Fachmann ist ersichtlich, daß das Fügeelement 260 längs der inneren Wände des Führungsstücks 232 gleiten kann, um das Fügeelement 260 während seines gesamten Laufweges weiter zu führen.

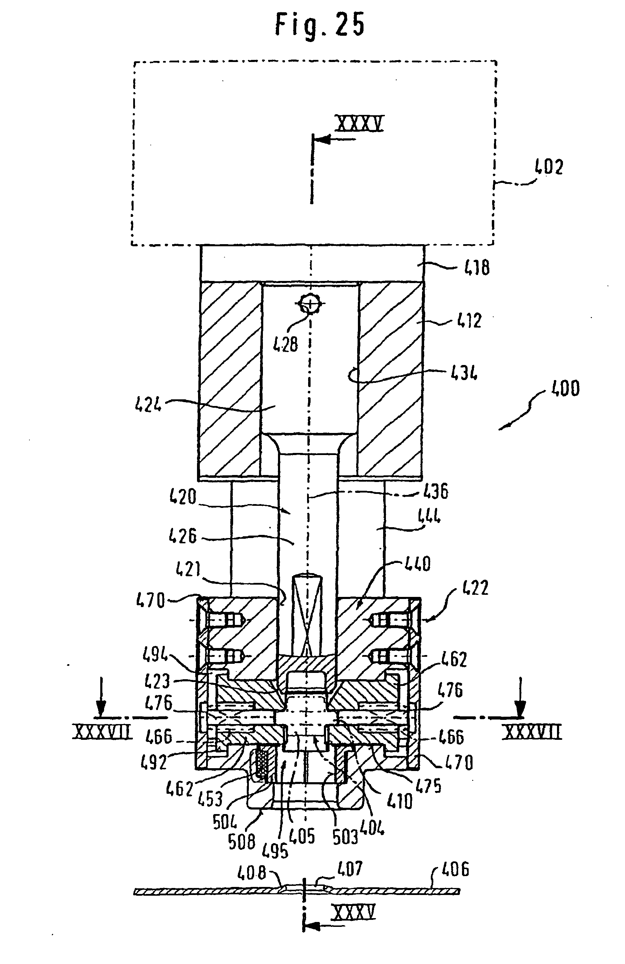

In Figur 24 ist eine weitere Ausführungsform gemäß dem vorliegenden Aspekt der Erfindung gezeigt. In dieser Ausführungsform sind die Haltefinger 310 schwenkbar am Stempel 220 mittels eines Schwenkstifts 312 angebracht. Wie in den vorherigen Ausführungsformen befindet sich das freie Ende 314 der Haltefinger 310 in Eingriff mit der versetzten Fläche 266 des Fügeelementes 260. Die Haltefinger 310 sind in Schlitzen 315 angebracht. Das gegenüberliegende Ende des Haltefingers 310 weist eine Nockenfläche 316 auf, die sich in Eingriff mit der inneren Wand des Führungsstücks 232 befindet. Die Nockenfläche 316 ist eine abgerundete Fläche, um Reibung zu reduzieren. Ein Anschlag 289 ist vorgesehen, wie in den vorherigen Ausführungsformen. In dieser Ausführungsform sind die Haltefinger 310 durch eine Schraubenfeder 318 vorgespannt, um das freie Ende 314 in die Richtung des Stempels 220 zu schwenken. Nachdem das Fügeelement angebracht ist, wirken die Haltefinger 310 nockenartig gegen die versetzte Fläche 266, um die Vorspannung der Federn 318 zu überwinden und das Fügeelement 260 freizugeben.

Figur 19 zeigt, wie die weitere erfindungsgemäße Lösung der Figuren 20 bis 24 bei der ersten erfindungsgemäßen Lösung angewandt werden kann. Man merkt, daß die durch die Kugeln 30 gebildeten Haltenasen in sichtliche Vertiefungen 13 des Elementes 12 eingreifen, so daß dieser erst freigegeben wird, wenn seine Unterseite am Blechteil 14 anliegt, und zwar ohne, daß die Haltefinger selbst das Blechteil berühren. Dies ist möglich, weil die durch die Vertiefungen 13 gebildeten Flächen von der Unterseite des Elementes beabstandet, d.h versetzbar, sind.

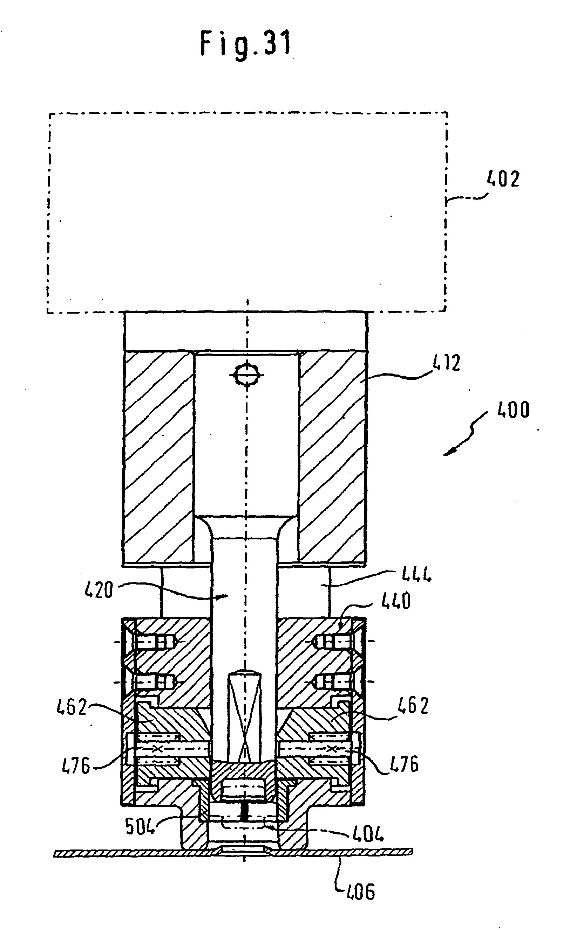

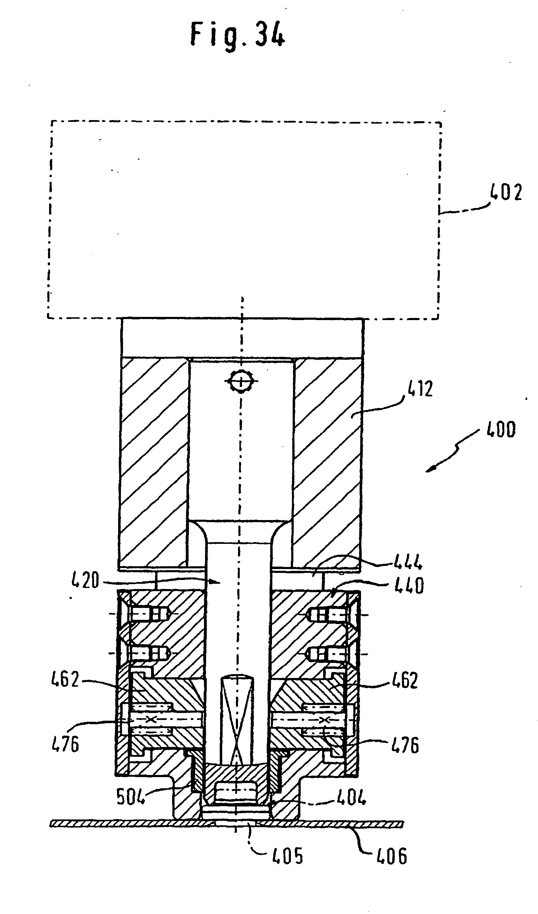

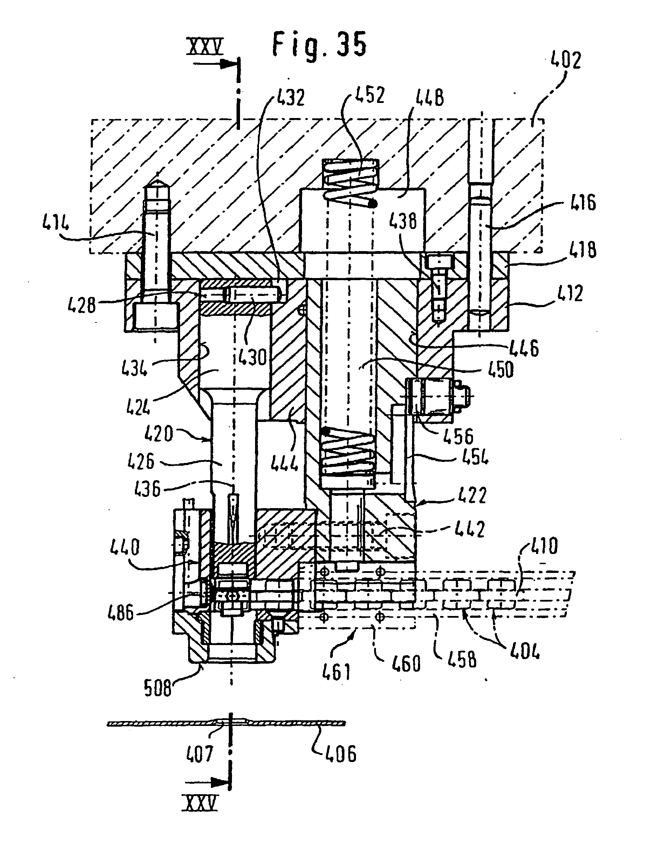

Es wird nunmehr die dritte erfindungsgemäße Lösung in Form der Führungs- und Setzeinrichtung 400 der Figuren 25 bis 38 beschrieben, und zwar zunächst unter Bezugnahme auf die Figuren 25 und 35.

Die Führungs- und Setzeinrichtung 400 ist, wie nachfolgend näher erläutert wird, am oberen Ende des oberen Werkzeugs 402 einer Presse befestigt und wird dazu verwendet, Fügeelemente 404, die hier in Form von Mutterelementen dargestelltsind, aber auch Bolzenelemente oderZapfenelemente oderähnlicheTeile sein können, in ein Blechteil oder in eine Blechtafel 406 einzusetzen, wobei das Blechteil 406 auf einem nicht gezeigten unteren Werkzeug der Presse abgestützt ist. Eine ebenfalls nicht gezeigte Matrize ist unterhalb der konusförmigen Erhebung 408 des Blechteils angeordnet, um die Vemietung des Elementes mit dem Blechteil 406 zu erreichen.

Dieses Nietverfahren kann beispielsweise entsprechend dem sogenannten Klemmlochnietverfahren derAnmelderin erfolgen, das in der europäischen Patentanmeldung 92 117 466.0 näher beschrieben ist. Die Führungs- und Setzeinrichtung 400 kann aber auch mit allen anderen bekannten Setz- und Einnietverfahren verwendet werden. Auf die genaue Art der Durchführung des jeweiligen Verfahrens kommt es hier nicht an, sondern auf die Führung der Elemente, wozu im Prinzip nur die äußere Gestaltung der Elemente wichtig ist. Wesentlich ist lediglich, daß die Elemente zwei äußere Abmessungen haben, die unterschiedlich sind. Bei runden Elementen kann es sich beispielsweise um zwei verschiedene Durchmesser handeln. Bei in Draufsicht rechteckigen Elementen können diese beispielsweise zwei verschiedene Breitenabmessungen in einer Querrichtung aufweisen. Wesentlich ist nur, daß durch diese unterschiedlichen Abmessungen an wenigstens zwei Stellen, die vorzugsweise einander gegenüberliegen, Stufen ausgebildet sind, welche eine formschlüssige Halterung des jeweiligen Elementes durch Halteglieder ermöglichen. Die Stufen müssen nicht unbedingt durch nach außen ragende Teile des Elementes gebildet werden, sondern könnten auch durch eine oder mehrere Vertiefungen in der Seitenwand des Elementes erreicht werden.

In dem konkret dargestellten Beispiel handelt es sich bei dem Element 404 um ein rundes Mutterelement mit einem etwa mittig angeordneten zylindrischen Flansch 410. Es soll aber betont werden, daß die Elemente nicht nur rund oder rechteckig sein können, sondern beinahe jede beliebige Querschnittsform aufweisen können, beispielsweise eine mehreckige oder polygonale Form oder eine genutete Form mit Längsnuten.

Es soll auch zum Ausdruck gebracht werden, daß die Führungs- und Setzeinrichtung 400 nicht unbedingt an dem oberen Werkzeug einer Presse befestigt werden muß. Die Führungs- und Setzeinrichtung 400 kann beispielsweise an einer Zwischenplatte der Presse oder am unteren Werkzeug der Presse befestigt werden. Ebenso könnte das Blechmaterial 406 auf einer Zwischenplatte der Presse oder auf dem oberen Werkzeug der Presse befestigt werden.

Die Führungs- und Setzeinrichtung 400 weist ein Befestigungsgehäuse 412 auf, welches über Schrauben 414 und Paßstifte 416 am oberen Werkzeug 402 der Presse befestigt ist. Das Befestigungsgehäuse 412, welches einen Deckel 418 aufweist, dient einerseits der Befestigung eines Stempels 420 am oberen Werkzeug 402, wirkt andererseits aber als Führung für den eigentlichen Setzkopf 422. Der Stempel 420 weist einen oberen Abschnitt 424 großen Durchmessers und einen unteren, ebenfalls zylindrischen Abschnitt 426 kleineren Durchmessers auf. Der obere Bereich 424 des Stempels ist mit einer Querbohrung 428 versehen, die der Aufnahme eines Paßstiftes 430 dient, dessen Kopf in eine axiale Nut 432 in der Seitenwand der zylindrischen Bohrung 434 hineinragt und auf diese Weise die Position des Stempels 420 um dessen Längsachse 436 festlegt. Der Stempel 420 wird mit einem festen Sitz in der Bohrung 434 aufgenommen und im übrigen durch den Deckel 418, welcher mit Schrauben, wie beispielsweise Schraube 438, am unteren Teil des Befestigungsgehäuses 412 befestigt ist, in seiner axialen Lage festgelegt. Der Stempel kann sich somit aufgrund des Deckels 418 nicht weiter nach oben bewegen, und er kann sich aufgrund des Paßstiftes 430, der am Ende der axialen Nut 432 liegt, auch nicht nach unten von der gezeigten Stellung wegbewegen. Der im wesentlichen zylindrische Unterteil 426 des Stempels wird im Führungsstück 440 des Setzkopfes 422 gleitbar geführt, und das Führungsstück 440 ist über Schrauben 442 und Paßstifte (nicht gezeigt) an einem Teil 444 des Setzkopfes befestigt, der gleitend innerhalb einer Bohrung 446 des Befestigungsgehäuses 412 aufgenommen ist. Der Teil 444, der parallel zum Stempel 420 geführt ist, ragt durch den Deckel 418 hindurch in eine Vertiefung 448 des oberen Werkzeuges 402 hinein und weist eine zylindrische Kammer 450 auf, welche eine Schraubendruckfeder 452 aufnimmt. Diese Schraubendruckfeder 452 ist an einem Ende am oberen Werkzeug 402 und am anderen Ende am unteren Ende der zylindrischen Kammer450 abgestützt und dient dazu, den Teil 444 in Richtung vom oberen Werkzeug 402 weg vorzuspannen. Der Teil 444 weist eine Führungsnut 454 auf, in welche ein Gleitstein 456 hineinragt, so daß der Teil 444 seine Ausrichtung relativ zum Befestigungsgehäuse 412 beibehäft. Dadurch wird sichergestellt, daß das Führungsstück 440 koaxial zum Stempel 420 geführt wird.

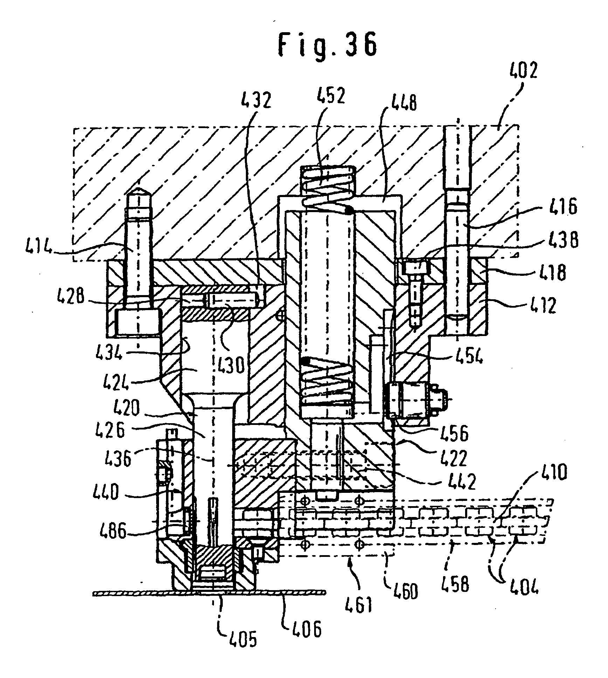

Unten rechts in Figur 36 ist eine Zuführeinrichtung 457 mit einem Zuführschlauch 458 für die einzusetzenden Elemente 410 zu erkennen. Der Zuführschlauch 458 ist über ein Mundstück 460 am Führungsstück 440 befestigt. Es kann sich bei dem Teil 458 auch um ein Magazin handeln, das beispielsweise mit einer beschränkten Anzahl von Befestigungselementen gefüllt ist. Das Mundstück 460 kann beispielsweise entsprechend der europäischen Patentanmeldung 93 911 446.8 ausgelegt sein.

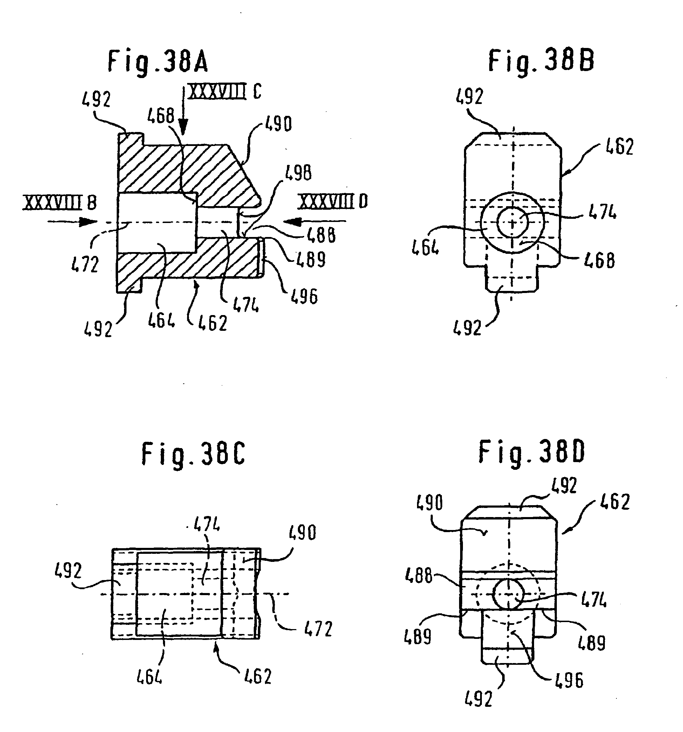

Innerhalb des Führungsstücks befinden sich zwei Halteglieder bzw. Haltefinger 462, welche in den Figuren 38 A-D näher gezeigt sind. Es ist zu erkennen, daß jeder Haltefinger 462 eine zylindrische Bohrung 464 aufweist, welche jeweils eine Schraubendruckfeder 466 aufnimmt, die mit ihrem einen Ende an einer Ringstufe 468 der Bohrung 464 und an ihrem anderen Ende an einer jeweiligen Abdeckplatte 470 des Führungsstücks 440 abgestützt ist und auf diese Weise den jeweiligen Haltefinger462 in Richtung auf das Element 404 zu vorspannt. Koaxial zur mittleren Längsachse 472 der zylindrischen Bohrung 464 befindet sich eine weiter Bohrung 474, welche einen kleineren Durchmesser aufweist als die zylindrische Bohrung 464.

Wie aus Figur 25 ersichtlich, ragt jeweils ein Zentrierstift 476 in die Bohrung 474 hinein, und die Haltefinger sind entlang dieser Zentrierstifte und in entsprechenden Aufnahmen 475 des Führungsstücks 440 gleitbar gelagert. Die Enden der Zentrierstifte 476 weisen einen Abstand voneinander entsprechend dem Durchmesser des Flanschteils 410 der Elemente auf, so daß die Elemente, die in das Führungsstück eingesetzt werden, dort von den Zentrierstiften zentriert werden.

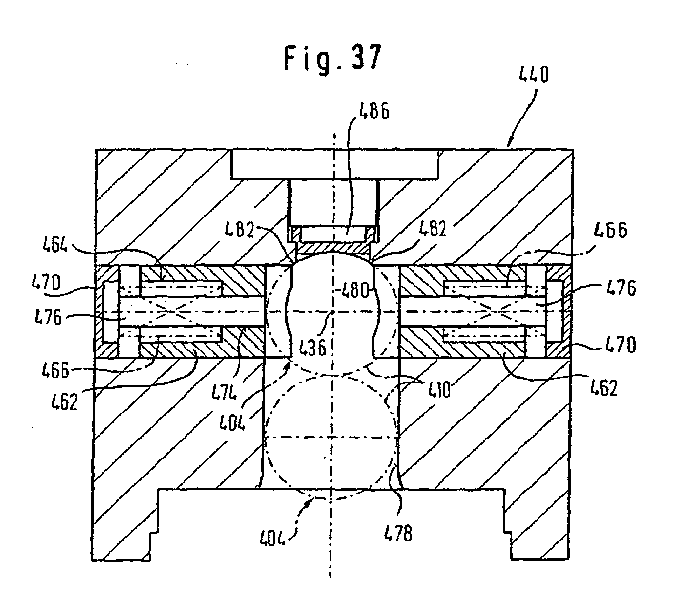

Die Zentrierung der Elemente ist am besten aus Figur 37 ersichtlich. Hier ist zunächst der Zuführkanal 478 zu erkennen, durch den die jeweiligen Elemente 404 in eine Aufnahmekammer 480 zwischen den zwei einander gegenüberliegenden Haltefingern 462 hineingeführt werden.

Aus Figur 37 ist auch ersichtlich, daß der zylindrische Flansch 410 des Elementes 404, welches sich zwischen den beiden Haltefingern 462 befindet, zwischen den Stirnenden der Zentrierstifte 476 in der Aufnahmekammer 480 zentriert wird. Es ist außerdem zu erkennen, daß der zylindrische Flansch 410 an zwei Anlagepunkten 482 des Führungsstücks 440 anliegt, die ebenfalls zu der genauen Zentrierung des Elementes 404 beitragen. Dem Zuführkanal 478 gegenüber befindet sich ein Näherungssensor 486, der dazu dient festzustellen, ob sich ein Element 404 zwischen den Haltefingern 462 befindet.

Obwohl in diesem Beispiel lediglich zwei Haltefinger 462 gezeigt sind, könnten auch weitere Haltefinger vorgesehen werden, falls dies erwünscht ist.

Die im hohlen Führungsstück 440 linear verschiebbaren Haltefinger 462, welche senkrecht zur mittleren Längsachse des Stempels verschiebbar sind, sind so angeordnet, daß die mit der Führungs- und Setzeinrichtung 400 zu handhabenden Elemente 404 durch den Zuführkanal 478 mit einem zylindrischen Abschnitt 410 ihrer Kontur in eine nutenförmige Ausnehmung, d.h. in die Führungsnut 488 der Haltefinger 462, hineingleiten können. Durch die Führungsnuten 488 werden Haltenasen 489 gebildet, welche das Element 404 vorübergehend halten. Der Zuführkanal 478 ist etwa unter einem rechten Winkel zum Kanal 421 angeordnet, in welchem der axial verschiebbare Stempel 420 bewegt wird.

Die in die Haltefinger 462 integrierten Zentrierstifte 476 sind so angeordnet, daß sich ihre Mittelachsen am Schnittpunkt mit der mittleren Längsachse des zu handhabenden Elementes 404 kreuzen.

Die Haltefinger 462 verfügen über eine Steuerkante bzw. eine Steuerfläche 490, über die sie durch den verschiebbar angeordneten Stempel 420 parallel zur mittleren Längsachse der Zentrierstifte 476 linear verschoben werden können. Bei dieser Bewegung der Haltefinger 462 ist die Position der Zentrierstifte 476 bezüglich des Führungsstücks 440 starr.

Diese Bewegung erfolgt gegen die Kraft der Federn 466, die die Haltefinger in ihre vorher durch Anschläge begrenzte Endlage zu schieben versucht. Diese Anschläge sind durch Vorsprünge 492 der Haltefinger gebildet, die am Boden einer entsprechenden Ausnehmung 494 des Führungsstücks zur Anlage kommen.

An den Haltefingern 462 sind außerdem Klemmflächen 496 ausgebildet, über die das jeweilige Element 404 nach dem Öffnen der Haltefinger kraftschlüssig gehalten werden kann. Hierzu wird die Kraft der die Haltefinger 462 schließenden Feder 466 verwendet. Die Klemmflächen 496 bilden ein Klemmittel 495.

In der Beladeposition der Figuren 25 und 35 gibt der Stempel 420 den Zuführkanal478 frei, so daß ein Element 404 in die zwischen den Haltefingern 462 und unterhalb des Stempels 420 entstandene Aufnahmekammer 480 hineingleiten kann. Das Element 402 wird in dieser Lage zwischen den Zentrierstiften 476 und den in das Führungsgehäuse integrierten Anschlagpunkten 488 sowie durch die Begrenzungsflächen 498 der in die Haltefinger 462 eingearbeiteten Führungsnuten 488 zentriert.

In einen oder mehrere der Anschlagpunkte im Führungsstück 440 kann, wie bereits erwähnt, ein Sensor 486 eingebaut werden, der die genaue Lagepositionierung des in den Haltefingern 462 gehaltenen Elementes 404 anzeigt.

Wird der Stempel 420 im Führungsgehäuse auf das jeweilige Element 404 zu bewegt, so öffnen sich die Haltefinger in ihrer Bewegung synchron zur Stempel- bzw. Stößelbewegung. Dies wird durch das Zusammenwirken der Steuerflächen 490 an den Haltefingern 462 und der Schrägflächen 421 am freien Ende des Stempels 420 bewerkstelligt. Die Anordnung ist so getroffen, daß die Haltefinger 462 unmittelbar vor Berührung des Stempels bzw. Stößels 420 mit dem Element 404 gerade einen so langen Hubweg quer zur Längsachse des Stempels zurückgelegt haben, daß keine Überdeckung zwischen Element 404 und Haltefinger 462 im Bereich der in die Haltefinger 462 eingearbeiteten Führungsnuten 488 mehr vorhanden ist.

In diesem Moment ist das Teil zwischen den Zentrierstiften 476 und den in das Führungsgehäuse integrierten Anschlagpunkten 482 zentriert. Zur Stempelseite hin ist eine formschlüssige Führung gegeben, und es kann beispielsweise ein zylindrischer Teil des Elementes in eine entsprechende zylindrische Ausnehmung am Stirnende des Stempels aufgenommen werden. Zur offenen Kanalseite hin ist eine kraftschlüssige Führung durch die Klemmflächen 496 der Haltefinger 462 gegeben. Bei der weiteren Stempelbewegung wird das Element 404 durch den Stempel 420 gegen die seitlich auf das Element wirkenden Klemmkräfte durch das Führungsstück hindurch geschoben. Hierdurch ist ein Anliegen des Elementes am Stempel und dadurch in Verbindung mit den in den Führungskörper eingearbeiteten Anschlagpunkten 488 eine Lagefixierung des Elementes 404 gewährleistet.

Innerhalb des anderen Teils des Führungsstücks 440 und unterhalb der Haltefinger befinden sich in das Führungsstück 440 integrierte Klemmteile 504, welche hier die Form von Halbschalen aufweisen und über Polyurethankissen 453 am Führungsstück 440 abgestützt, jedoch in Richtung auf die mittleren Längsachsen des Führungsstücks zu vorgespannt sind, so daß sie an dem Element während der weiteren Bewegung durch das Führungsstück anliegen und Klemmkräfte auf dieses Element aufbringen, die dafür sorgen, daß das Element 404 zentriert und nur synchron mit der Bewegung des Stempels 420 bewegt wird. Es entsteht somit Reibung zwischen den Klemmflächen 503 der Klemmteile 504 und dem Flanschteil 410 des Elementes, und zwar wenigstens so lange, bis der untere zylindrische Teil 405 des Elementes 404 in das Loch 407 des Blechteils 406 eingesetzt ist, und vorzugsweise so lange, bis das Nietverfahren beendet ist. Die Klemmflächen 502 gehören auch zum Klemmittel 495.

Es ist auch möglich, die Klemmteile 504 mit den Klemmflächen 496 zu kombinieren, und zwar beispielsweise dadurch, daß die Klemmteile 504 eine nach unten gerichtete Fortsetzung der Haltefinger 462 darstellen. Beispielsweise könnten die rechtwinklig ausgebildeten Klemmteile 504 an die Haltefinger angeformt oder mit diesen verschraubt werden. Auch ist es möglich, das Klemmittel 495 ausschließlich durch an den Haltefingern vorgesehene Klemmflächen zu realisieren oder an den Haltegliedern keine Klemmflächen 496 vorzusehen, sondern ausschließlich mit einer getrennten, unterhalb der Haltefinger 462 vorgesehenen Klemmeinrichtung 495 zu arbeiten.

Im Zuge der weiteren Schließbewegung der Führungs- und Setzeinrichtung 400 wird das Element 404 durch den Stempel gegen die seitlich auf das Element wirkenden Klemmkräfte vorwärts getrieben und erst unmittelbar vor oder nach dem Einnieten oder Absetzen freigegeben.

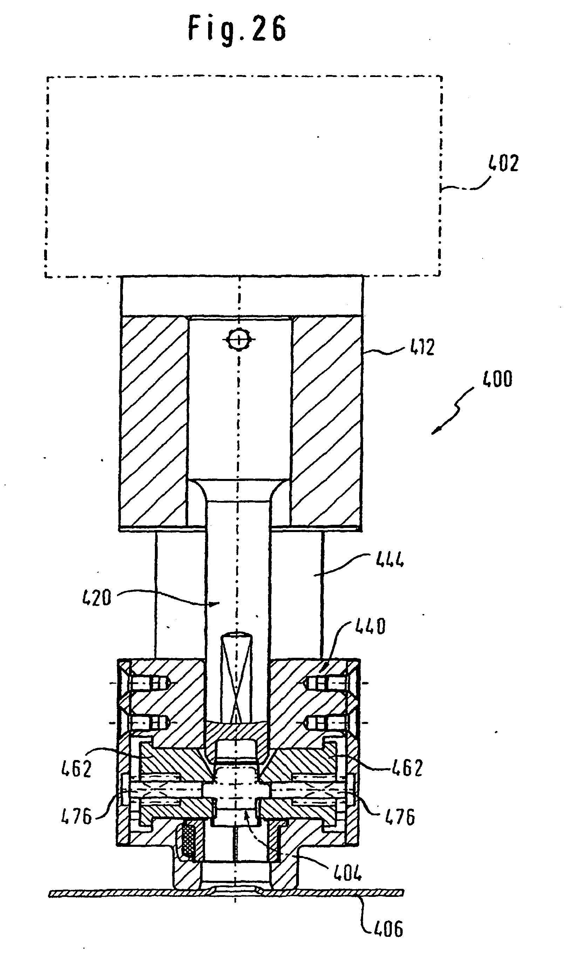

Wie bereits zum Ausdruck gebracht, zeigen die Figuren 25 und 35 die Beladesituation. Dies bedeutete, daß die Presse geöffnet und das obere Werkzeug 402 nach oben gefahren ist, wobei die Feder 452 (welche auch durch andere Federmittel wie beispielsweise Gasdruck ersetzt werden kann) das Führungsstück 440 vom Befestigungsgehäuse 412 wegdrückt, so daß die Aufnahmekammer 480 frei ist. In dieser Position kann die Zuführeinrichtung 461 ein weiteres Element in die Aufnahmekammer 480 hineindrücken. Sobald der Sensor 486 ermittelt, daß das Element 404 zentriert zwischen den beiden Haltefingern 462 positioniert ist, darf die Presse wieder schließen, d.h. es darf dann mit einem neuen Arbeitstakt begonnen werden. Bei diesem neuen Arbeitstakt bewegt sich das obere Werkzeug 402 nach unten, bis das Stirnende 508 des Führungsstücks 440 das Blechteil 406 berührt und dieses gegen das nicht gezeigte untere Werkzeug der Presse bzw. die Matrize drückt, und zwar mit einer Kraft, welche von der Feder 452 bestimmt wird. Diese Lage ist in Figur 26 dargestellt.

Bei der weiteren Schließbewegung der Presse weicht der Setzkopf 422, d.h. das Führungsstück 440 mit dem Teil 444, gegenüber dem Befestigungsgehäuse 412 zurück. Dies bedeutet, daß das Stirnende des Stempels 420 damit beginnt, sich durch das Führungsstück hindurchzubewegen.

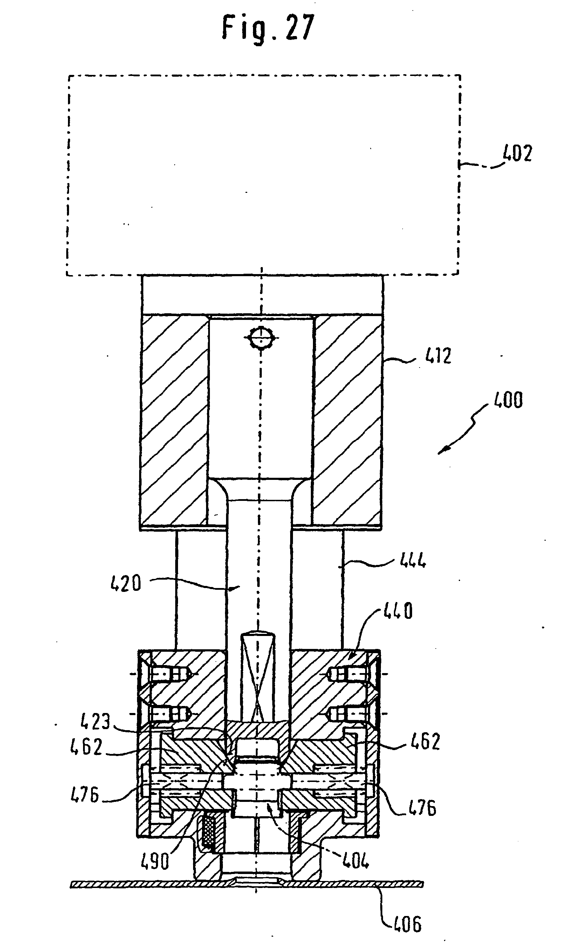

Im Stadium der Figur 27 haben die Schrägflächen 421 am Ende des Stempels die Steuerflächen 490 erreicht, und die Haltefinger beginnen sich zu öffnen.

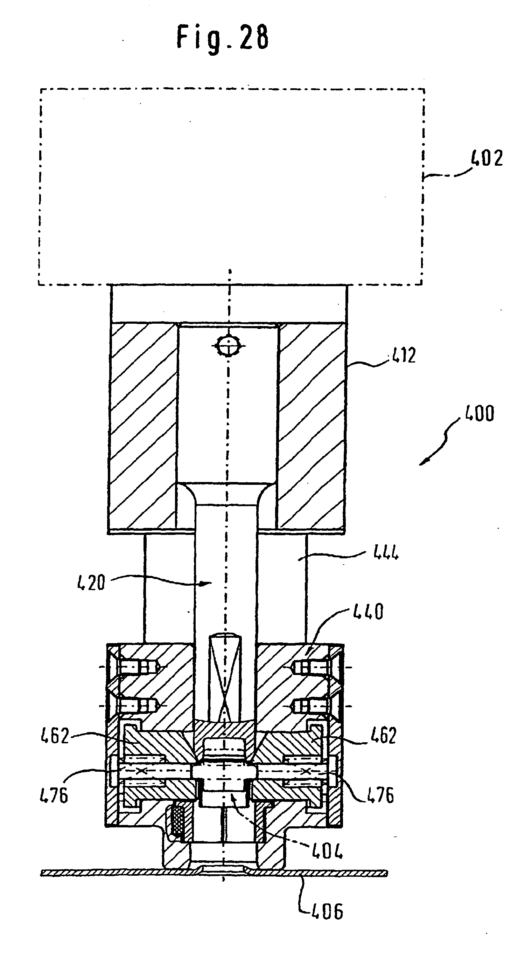

Figur 28 zeigt diese Öffnungsbewegung noch bevor sie beendet ist.

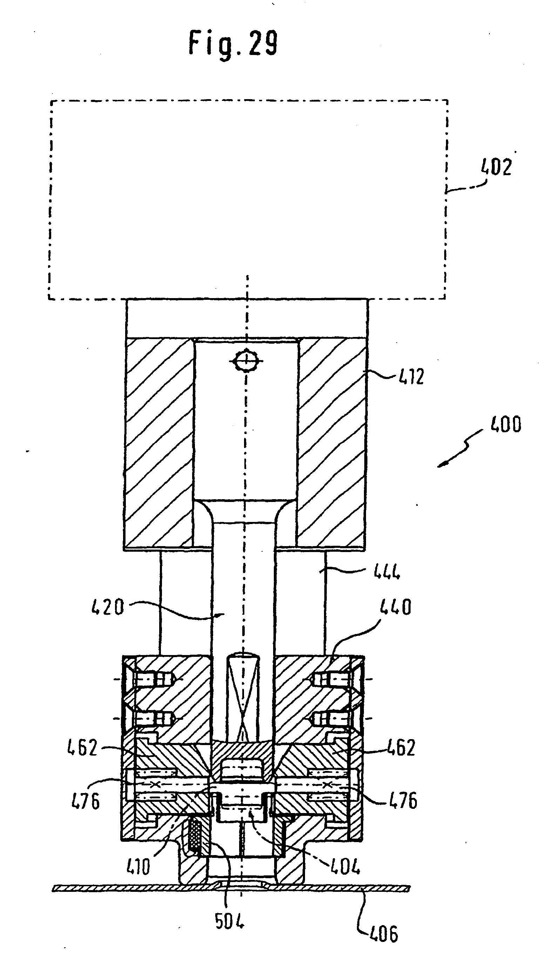

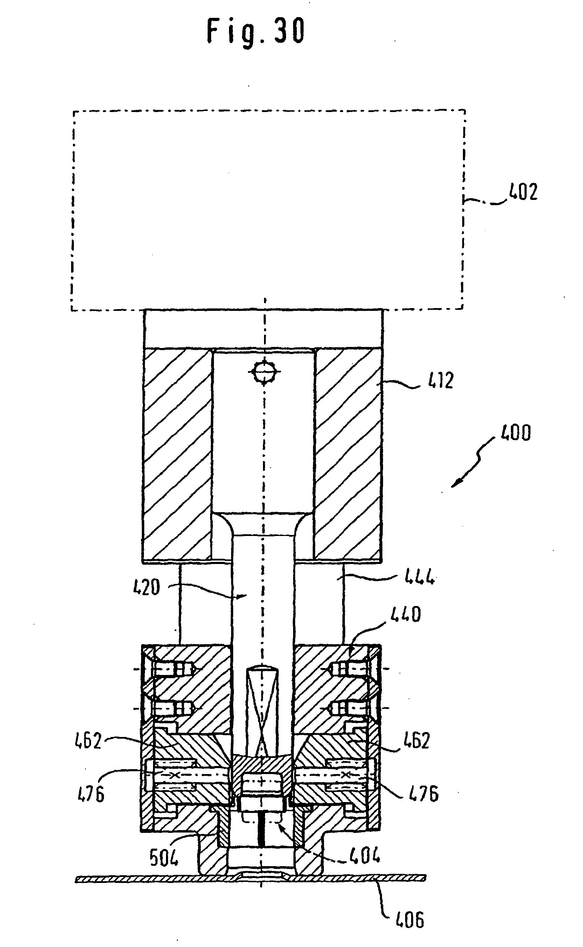

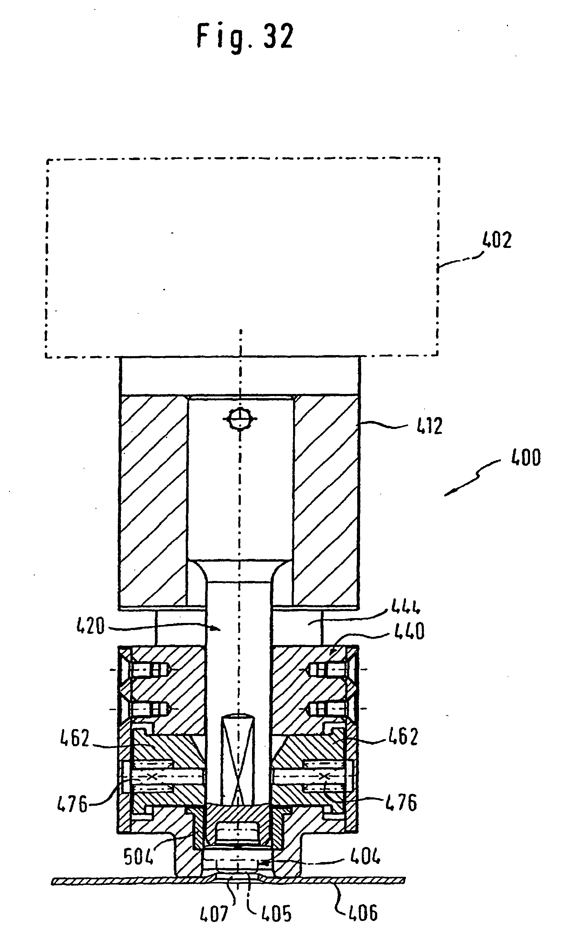

Sobald die Lage gemäß Figur 29 erreicht ist, befindet sich der zylindrische Flansch 410 des Elementes zwischen den Klemmflächen 496 der Haltefinger. Im weiteren Verlauf der Bewegung wird das Element 404 mit seinem Ringflansch 410 durch die Bewegung des Stempels von den in das Führungsstück integrierten Klemmflächen übernommen und dazwischen gehalten. Dann wird es über die Zwischenstadien der Figuren 30 bis 32 fortschreitend nach unten gedrückt, bis - im Stadium der Figur 32 - der zylindrische Unterteil des Elementes in das Loch des Blechteils eingeführt ist. Die Klemmflächen 503 im Führungsstück können so angeordnet werden, daß auch im Stadium der Figur 32 das Element durch diese Klemmflächen gehalten wird.

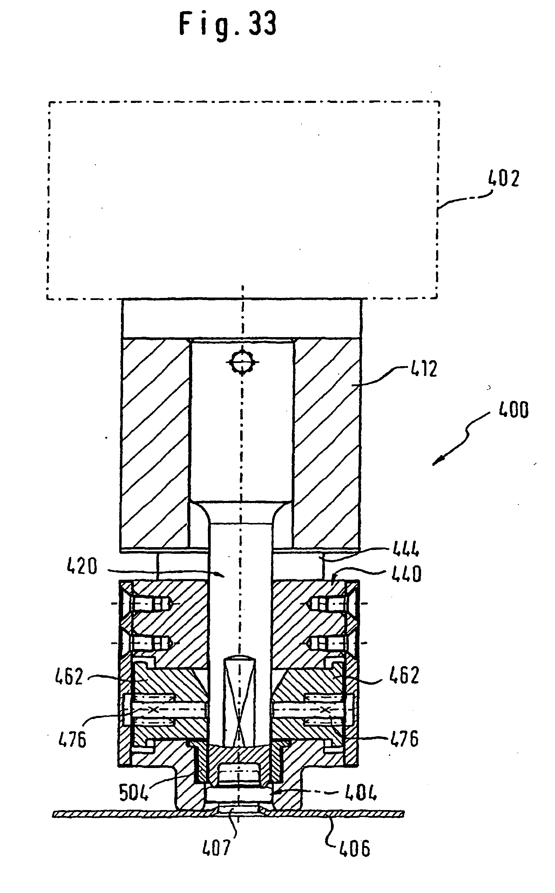

Figur 33 zeigt dann den Zustand der vollständig geschlossenen Presse nach dem Einnieten des Elementes in das Blechteil.

Die gleiche Situation ist in Figur 36 gezeigt. Die Presse beginnt dann sich wieder zu öffnen, wobei das Blechteil mit dem eingenieteten Element aus der Presse entfernt und durch ein neues Blechteil ersetzt wird und die Presse in die Beladesituation gemäß den Figuren 25 und 35 zurückkehrt.

Auch bei dieser Ausführungsform ist zu erkennen, daß das Element über den gesamten Weg von der Beladeposition bis zum Einsetzen des Elementes in das Blechteil verkantungsfrei geführt wird.

Die Zentrierstifte 476 sind nicht unbedingt erforderlich und könnten gegebenenfalls weggelassen werden. In diesem Fall könnte die Zentrierung über die Haltefinger 462 bewerkstelligt werden.

## Patentansprüche

1. Führungs- und/oder Setzeinrichtung (10) für Elemente (12), insbesondere Fügeelemente, bestehend aus einem hohlen Führungsstück (16), einem innerhalb des Führungsstücks (16) axial verschiebbar angeordneten Stempel (20) und senkrecht zum Stempel verschiebbar geführten Haltegliedern (30) mit an ihrem einen, dem Stirnende (58) des Stempels zugeordneten Ende vorgesehenen Haltenasen (60), wobei in einer zurückgezogenen Beladeposition des Stempels jeweils ein Element von der Seite her zwischen den Haltenasen (60) und dem freien Stirnende (58) des Stempels (20) einführbar ist und die Haltenasen (60) anschließend während einer Vorschubbewegung des Stempels (20) unter der Einwirkung dieses seitlich nach außen bewegbar sind, um das Element (12) freizugeben, wobei die Halteglieder (30) Bestandteile einer parallel zum Stempel (20) verschiebbar geführten Trägereinrichtung (24, 26) sind, wobei die Trägereinrichtung über einen Teil der Bewegung des Stempels bis zur Freigabe des Elements (12) mit dem Stempel (20) synchron bewegbar ist,
**dadurch gekennzeichnet,**
**daß** die Trägereinrichtung (24, 26) zumindest im wesentlichen nur linear verschiebbar ist, daß die die Haltenasen (60) aufweisenden Halteglieder (30) in seitlicher Richtung innerhalb der Trägereinrichtung (24,26) verschiebbar geführt sind und daß die Innenwand (68) des Führungsstücks (16) derart gestaltet ist, daß die in derBeladeposition des Stempels (20) nach innen gedrückten Halteglieder (30) beim Erreichen der Freigabeposition relativ zur Trägereinrichtung seitlich nach außen drückbar sind.

2. Führungs- und/oder Setzeinrichtung nach Anspruch 1,
**dadurch gekennzeichnet,**
**daß** am Führungsstück (16) mindestens ein Anschlag (50) vorgesehen ist, welcher die axiale Lage der Trägereinrichtung (24,26) in der Beladeposition begrenzt bzw. definiert, wobei ein Mittel (52,56) vorgesehen ist, um die Trägereinrichtung (24,26) in der Beladeposition am Anschlag (50) des Führungsstücks (16) zu positionieren bzw. gegen diesen vorzuspannen und das genannte Mittel wahlweise durch an derTrägereinrichtung (24,26) und/oder am Stempel (20) vorgesehene, miteinander zusammenwirkende Anschläge (52,56) gebildet ist.

3. Führungs- und/oder Setzeinrichtung nach Anspruch 2,
**dadurch gekennzeichnet,**
**daß** der Anschlag (56) am Stempel oder der damit zusammenwirkende Anschlag (52) an der Trägereinrichtung (24,26) in einer länglichen Ausnehmung (54) des jeweils anderen Teils angeordnet ist, deren eines Ende (56) einen Anschlag bildet und deren Länge die erforderliche relative axiale Beweglichkeit der Teile während der Vorschubbewegung des Stempels (20) gestattet.

4. Führungs- und/oder Setzeinrichtung nach einem der vorhergehenden Ansprüche,
**dadurch gekennzeichnet,**
**daß** der Stempel (20) im Querschnitt kreisrund, elliptisch, viereckig, quadratisch oder polygonal ist.

5. Führungs- und/oder Setzeinrichtung nach einem der vorhergehenden Ansprüche,
**dadurch gekennzeichnet,**
**daß** das Führungsstück (16) eine seitliche Öffnung (22) aufweist, durch welche hindurch dasjeweilige Element in einen sich zwischen den Haltenasen (60) und dem diesen zugeordneten Stirnende (58) des Stempels (20) und in axialer Ausrichtung mit dem Stempel befindlichen Raum (62) einführbar ist und daß eine Detektoreinrichtung (102), beispielsweise ein Näherungssensor, im Führungsstück (16) vorgesehen ist, um das Vorhandensein eines jeweiligen Elements (12) zwischen den Haltenasen (60) und dem diesen zugeordneten Stirnende (58) des Stempels (20) zu überprüfen.

6. Führungs- und/oder Setzeinrichtung nach einem der vorhergehenden Ansprüche,
**dadurch gekennzeichnet,**
**daß** die Trägereinrichtung (24,26) durch mindestens zwei Haltefinger (26) gebildet ist, wobei zwei Haltefinger (26) so angeordnet sind, daß zwischen diesen in der Beladeposition eine Öffnung gebildet ist, welche eine Größe aufweist, die das Einführen eines jeweiligen Elements zwischen die Haltenasen (60) und das diesen zugeordnete Ende (58) des Stempels (20) gestattet

7. Führungs- und/oder Setzeinrichtung nach einem der Ansprüche 1 bis 6,
**dadurch gekennzeichnet,**
**daß** die Trägereinrichtung (24,26) durch eine Hülse gebildet ist, welche mindestens eine seitliche Aussparung aufweist, um das Einführen eines jeweiligen Elements zwischen die Haltenasen und das diesen zugeordnete Ende des Stempels zu gestatten.

8. Führungs- und/oder Setzeinrichtung nach einem der vorhergehenden Ansprüche,
**dadurch gekennzeichnet,**
**daß** die Haltenasen (60) durch jeweilige Kugeln (30) gebildet sind, die in sich in seitlicher Richtung erstreckenden Bohrungen (28) der Trägereinrichtung (24,26) angeordnet sind, welche an ihren inneren Enden jeweilige Öffnungen (32) aufweisen, die kleiner sind als der Durchmesser der jeweiligen Kugeln (30).

9. Führungs- und/oder Setzeinrichtung nach einem der vorhergehenden Ansprüche 1 bis 7,
**dadurch gekennzeichnet,**
**daß** die Halteglieder durch jeweilige Zylinderstifte gebildet sind, deren dem Stempel zugewandten und die Haltenasen bildenden Enden abgerundet sind.

10. Führungs- und/oder Setzeinrichtung nach einem der vorhergehenden Ansprüche 1 bis 7,
**dadurch gekennzeichnet,**
**daß** die Halteglieder (30) durch jeweilige prismatische Führungsstücke gebildet sind, deren dem Stempel (20) zugewandten Enden abgerundet oder abgeschrägt sind.

11. Führungs- und/oder Setzeinrichtung nach einem der vorhergehenden Ansprüche,
**dadurch gekennzeichnet,**
**daß** eine Feder vorgesehen ist, um die Halteglieder nach innen vorzuspannen, oder daß Federmittel (106) vorgesehen sind, um die Glieder (30) nach außen vorzuspannen.

12. Führungs- und/oder Setzeinrichtung nach einem der vorhergehenden Ansprüche,
**dadurch gekennzeichnet,**
**daß** ein Befestigungsgehäuse (82) vorgesehen ist, in welchem das Führungsstück (16) in Achsrichtung des Stempels (20) verschiebbar angeordnet und fedemd in Richtung vom Befestigungsgehäuse (B2) weg vorgespannt ist, wobei das Befestigungsgehäuse (82) zur Anbringung an einem Werkzeug einer Presse ausgebildet ist.

13. Führungs-und/oder Setzeinrichtung nach Anspruch 12,
**dadurch** gekennzeichnei,
daß der Stempel (20) am Befestigungsgehäuse (82) befestigt ist und der am Führungsstück (16) vorgesehene Anschlag (50) sowie die am Stempel (20) und an der Trägereinrichtung (24,26) zusammenwirkenden Anschläge (52,56) gemeinsam die Ausgangsposition des Führungsstücks (16) in der Beladeposition definieren und/oder die maximale Ausfahrbewegung des Führungsstücks (16) gegenüber dem Befestigungsgehäuse (82) begrenzen.

14. Führungs- und/oder Setzeinrichtung nach einem der vorhergehenden Ansprüche,
**dadurch gekennzeichnet,**
**daß** die Halteglieder zur Anwendung mit einem Element ausgelegt sind, das mindestens an einander gegenüberliegenden, mit den Haltegliedern zusammenarbeitende Seiten oder um seinen Umfang eine konkave oder konvexe Formgebung aufweist, welche von seiner Unterseite beabstandet ist und mit einer komplementären Gestaltung an den Haltegliedern zusammenarbeitet, damit das Element mindestens bis zur Berührung mit einer Tafel oder vorzugsweise bis zur Vollendung der Verbindung mit der Tafel von den Haltegliedern haltbar ist, ohne die Tafel zu markieren.

15. Führungs- und/oder Setzeinrichtung in Kombination mit einem befestigungselement (260) zum Anbringen des Befestigungselementes (260) an einem Blechteil (264),
wobei die Führungs- und/oder Setzeinrichtung umfaßt:
- einen Hauptkörper mit einem Stempeldurchgang (236) und einem Eintrittsweg (256) für das Einsetzen von jeweiligen Befestigungselementen (260) in den Stempeldurchgang (236) benachbart zum Stempel (220),
- einen Stempel (220), der hin- und herbewegbar im Stempeldurchgang (236) des Hauptkörpers (232) angeordnet ist, wobei der Stempel (220) ein freies Ende aufweist, das so ausgebildet ist, daß es mit dem Befestigungselement (260) in Eingriff gelangt, wenn sich das Befestigungselement (260) im Stempeldurchgang (236) befindet, um das Befestigungselement (260) durch den Hauptkörper (232) und zum Blechteil (264) zu treiben,
- wenigstens zwei Haltefinger(270; 290; 310), die wirksam mit dem Stempel (220) verbunden sowie schwenkbar bezüglich des Stempels und des Befestigungselementes (260) angebracht sind, wobei sich die Haltefinger (270; 290; 310) über das freie Ende des Stempels hinaus erstrecken, um mit dem Befestigungselement (260) in Eingriff zu gelangen und dieses benachbart dem Stempel (220) zu halten, während der Stempel (220) das Befestigungselement (260) zum Blechteil (264) treibt,
wodurch das Befestigungs- bzw. Fügeelement positiv in einer richtig ausgerichteten Position bezüglich des Stempels (220) und des Blechteils (264) von dem Punkt, an welchem das Befestigungs- bzw. Fügeelement in den Stempeldurchgang (236) eintritt, hält, wobei das Befestigungselement auf allgemein entgegengesetzten Seiten versetzte Flächen aufweist, die spezifisch so ausgebildet sind, daß sie die freien Enden der Haltefinger aufnehmen, und das Befestigungselement (260) gegen das Blechteil (264) zwischen dem Stempel (220) und dem Haltefinger (270; 290; 310) haltbar ist, um ein richtig angebrachtes Befestigungselement (260) zu gewährleisten,
**dadurch gekennzeichnet, daß**
sowohl beim Eingriff des Befestigungselements (260) gegen das Blechteil (264) als auch beim nachfolgenden Anbringen des Befestigungselements (260) am Blechteil (264) die dem Blechteil zugewandte Seite der in den versetzten Flächen aufgenommenen freien Enden der Haltefinger (270; 290; 310) von diesem einen Abstand aufweisen, und daß die freien Enden der Haltefinger (276; 296; 314) beim Wegziehen des Stempels (220) nockenartig gegen die versetzten Flächen (266) des angebrachten Befestigungselements (260) wirken und hierdurch vom Befestigungselement (260) durch eine Schwenkbewegung gegenüber dem Stempel (220) wegschwenkbar sind.

16. Führungs- und/oder Setzeinrichtung nach Anspruch 15, **dadurch gekennzeichnet, daß** der Hauptkörper (232) als hülsenförmiges Führungsstück (232) ausgebildet ist, das hin- und herbewegbar um den Stempel (220) herum angeordnet ist, wobei das Führungsstück (232) eine profilierte innere Wand (286, 287, 288) aufweist, die Haltefinger (270; 290; 310) eine profilierte äußere Kante (278; 316) benachbart der inneren Wand des Führungsstücks (286, 287, 288) aufweisen, und die profilierte äußere Kante (278; 316) der Haltefinger (270; 290; 310) und die profilierte innere Kante (286, 287, 288) des Führungsstücks (232) nebeneinander liegen und zusammenwirkend geformt sind, um die Haltefinger (270; 290; 310) in und außer Eingriff mit dem Befestigungselement (260) zu schwenken, während der Stempel (220) und das Führungsstück (232) sich gegeneinander bewegen.

17. Führungs- und / oder Setzeinrichtung nach Anspruch 15, **dadurch gekennzeichnet, daß** die Führungs- und/oder Setzeinrichtung Vorspannmittel umfaßt, um die Haltefinger (270; 290; 310) in der Richtung des Stempels (220) vorzuspannen und somit positiv mit dem Befestigungselement (260) in Eingriff zu gelangen.

18. Führungs-und/oder Setzeinrichtung (400) für Elemente (404), insbesondere Fügeelemente, bestehend aus einem hohlen Führungsstück (440), einem innerhalb des Führungsstücks (440) axial verschiebbar angeordneten Stempel (420) und senkrecht zum Stempel verschiebbar geführten Haltegliedern (462) mit an ihrem einen, dem Stirnende des Stempels zugeordneten Ende vorgesehenen Haltenasen (489), wobei in einer zurückgezogenen Beladeposition des Stempels jeweils ein Element von der Seite herzwischen den Haltenasen (489) und dem freien Stirnende des Stempels (420) einführbar ist und die Haltenasen (489) anschließend während einer Vorschubbewegung des Stempels (420) unter der Einwirkung dieses seitlich nach außen bewegbar sind, um das Element (404) freizugeben, wobei die Halteglieder (462) in Richtung auf die Längsachse (436) des Stempels (420) bzw. des Führungsstückes (444) vorgespannt sind und oberhalb der Haltenasen (489) jeweilige Steuerflächen (490) aufweisen, welche mit am Stempel vorgesehenen Steuerflächen (421) zusammenarbeiten und gegen die Vorspannkraft zeitlich nach außen bewegbar sind, bis das jeweilige Element (404) unter der Einwirkung des Stempels (420) in axialer Richtung an den Haltenasen vorbeibewegbar ist, und
unterhalb der Haltenasen in Richtung auf die Längsachse zu vorgespannte Klemmittel (495) vorgesehen sind, welche auf das Element (404) eine klemmende Wirkung ausüben, während es durch den Stempel (420) an dieses Klemmittel vorbeigedrückt wird.

19. Führungs- und/oder Setzeinrichtung nach dem Anspruch 18,
**dadurch gekennzeichnet,**
**daß** die Klemmmittel (495) zumindest zum Teil durch an den Haitegliedem (462) vorgesehenen Klemmflächen (496) gebildet sind.

20. Führungs- und/oder Setzeinrichtung nach Anspruch 18 oder 19,
**dadurch gekennzeichnet,**
**daß** die Klemmmittel (495) wenigstens zum Teil durch unterhalb der Halteglieder (462)im Führungsstück angeordnete Klemmteile (504) gebildet sind, welche mit einer eigenen Vorspanneinrichtung (453) ausgestattet sind.

21. Führungs- und/oder Setzeinrichtung nach einem der vorhergehenden Ansprüche 18 bis 20,
**dadurch gekennzeichnet,**
**daß** im Führungsstück abgestütze Zentrierstifte (476) vorgesehen sind, welche vorzugsweise durch die Haltefinger (462) hindurchragen und das jeweilige Element (404), während es von den Haltefingern (462) gehalten wird, zentrieren.

22. Führungs- und/oder Setzeinrichtung nach Anspruch 21,
**dadurch gekennzeichnet,**
**daß** das Führungsstück (440) Anlagepunkte bzw.-flächen (482) für das jeweilige Element (404) an Stellen aufweist, welche der Beladeöffnung für die Elemente gegenüberliegen.

## Claims

1. A guide and/or setting device (10) for elements (12), in particular fastener elements, comprising a hollow guide piece (16), a plunger (20) arranged axially displaceable within the guide piece (16) and holding members (30) displaceably guided perpendicular to the plunger and having holding noses (60) provided at their end associated with the end face (58) of the plunger, wherein, in a withdrawn loading position of the plunger, one element can in each case be introduced from the side between the holding noses (60) and the free end (58) of the plunger (20), and wherein the holding noses (60) are subsequently movable during an advance movement of the plunger (20) under the action of the latter laterally outwardly in order to release the element (12), with the holding members (30) being components of a carrier device (24, 26) displaceably guided parallel to the plunger (20), wherein the carrier device is movable synchronously with the plunger (20) over a part of the movement of the plunger prior to release of the element (12),
**characterised in that**
the carrier device (24, 26) is at least substantially only linearly displaceable; **in that** the holding members (30) having the holding noses (60) are displaceably guided in the lateral direction within the carrier device (24, 26) and **in that** the inner wall (68) of the guide piece (16) is designed such that the holding members (30) which are inwardly pressed in a loading position of the plunger (20) can be pressed laterally outwardly relative to the carrier device on reaching the release position.

2. A guide and/or setting device in accordance with claim 1, **characterised in that** at least one abutment (50) is provided at the guide piece (16) and bounds or defines the axial position of the carrier device (24, 26) in the loading position, with a means (52, 56) being provided to position the carrier device (24, 26) in the loading position at the abutment (50) of the guide piece (16) or to bias it against this and wherein said means is alternatively formed by abutments (52, 56) provided at the carrier device (24, 26) and/or at the plunger (20) and cooperating with one another.

3. A guide and/or setting device in accordance with claim 2, **characterised in that** the abutment (56) at the plunger, or the abutment (52) at the carrier device (24, 26) cooperating with this, is arranged in an elongate cut-out (54) of the respectively other part, whose one end (56) forms an abutment and whose length allows the required relative axial movability of the parts during the advance movement of the plunger (20).

4. A guide and/or setting device in accordance with any one of the previous claims, **characterised in that** the plunger (20) is circular, elliptical, quadrilateral, square or polygonal in cross-section.

5. A guide and/or setting device in accordance with any one of the previous claims, **characterised in that** the guide piece (16) has a lateral opening (22) through which the respective element can be introduced into a space (62) located between the holding noses (60) and the end face (58) of the plunger (20) associated with these and with the plunger in an axial orientation; and **in that** a detector device (102), for example a proximity sensor, is provided in the guide piece (16) to check the presence of a respective element (12) between the holding noses (60) and the end face (58) of the plunger (20) associated with these.

6. A guide and/or setting device in accordance with any one of the previous claims, **characterised in that** the carrier device (24, 26) is formed by at least two holding fingers (26), with two holding fingers (26) being arranged such that an opening is formed between these in the loading position and has a size which allows the introduction of a respective element between the holding noses (60) and the end (58) of the plunger (20) associated with these.

7. A guide and/or setting device in accordance with any of claims 1 to 6, **characterised in that** the carrier device (24, 26) is formed by a sleeve which has at least one lateral cut-out to allow the introduction of a respective element between the holding noses and the end of the plunger associated with these.

8. A guide and/or setting device in accordance with any one of the previous claims, **characterised in that** the holding noses (60) are formed by respective balls (30) which are arranged in bores (28) of the carrier device (24, 26) which extend in a lateral direction and which have respective openings (32) at their inner ends which are smaller than the diameters of the respective balls (30).

9. A guide and/or setting device in accordance with any one of the previous claims 1 to 7, **characterised in that** the holding members are formed by respective parallel pins and the ends forming holding noses are rounded.

10. A guide and/or setting device in accordance with any one of the previous claims 1 to 7, **characterised in that** the holding members (30) are formed by respective prismatic guide pieces whose ends confronting the plunger (20) are rounded or chamfered.

11. A guide and/or setting device in accordance with any one of the previous claims, **characterised in that** a spring is provided to bias the holding members inwardly; or **in that** spring means (106) are provided to bias the members (30) outwardly.

12. A guide and/or setting device in accordance with any one of the previous claims, **characterised in that** a mounting housing (82) is provided in which the guide piece (16) is displaceably arranged in the axial direction of the plunger (20) and which is resiliently biased in the direction away from the mounting housing (82), with the mounting housing (82) being formed to be fitted to a tool of a press.

13. A guide and/or setting device in accordance with claim 12, **characterised in that** the plunger (20) is mounted on the mounting housing (82) and the abutment (50) provided at the guide piece (16) as well as the abutments cooperating at the plunger (20) and at the carrier device (24, 26) together define the starting position of the guide piece (16) in the loading position and/or limit the maximum moving out of the guide piece (16) with respect to the mounting housing (82).

14. A guide and/or setting device in accordance with any one of the previous claims, **characterised in that** the holding members are designed for use with an element which has, at least at oppositely disposed sides, which cooperate with the holding members, or about its periphery, a concave or convex shape which is spaced apart from its lower side and cooperates with a complementary design at the holding members so that the element can be held by the holding members at least up to contact with a plate, or preferably up to the completion of the connection to the plate, without marking the plate.

15. A guide and/or setting device in combination with a fastener element for the attachment of the fastener element (260) to a sheet metal part (264) wherein the guide and/or setting device comprises:
- a main body having a plunger passage (236) and an entry path (256) for the insertion of respective fastener elements (260) into the plunger passage (256) adjacent to the plunger (220),
- a plunger (220) which is disposed in the plunger passage (236) of the main body for to and fro movement, with the plunger having a free end which is so formed that it enters into engagement with the fastener element (260) when the fastener element (260) is located in the plunger passage (236) in order to drive the fastener element (260) through the main body (232) and to the sheet metal part (264),
- at least two holding fingers (270; 290; 310) which are actively connected to the plunger (220) and also pivotally mounted with respect to the plunger and the fastener element (260), with the holding fingers (270; 290; 310) extending beyond the free end of the plunger in order to enter into engagement with the fastener element (260) and to hold this adjacent to the plunger (220) while the plunger (220) drives the fastener element (260) to the sheet metal part (264),
whereby the fastener element is positively held in a correctly aligned position with respect to the plunger (220) and the sheet metal part (264) from that point onwards at which the fastener element enters into the plunger passage (236), with the fastener element having offset surfaces on generally opposed sides which are specifically so designed that they receive the free ends of the holding fingers and the fastener element (260) can be held against the sheet metal part (264) between the plunger (220) and the holding fingers (270; 290; 310) in order to ensure a correctly attached fastener element (260),
**characterised in that**
both during the engagement of the fastener element (260) against the sheet metal part (264) as well as during the subsequent attachment of the fastener element (260) to the sheet metal part (264), the side confronting the sheet metal part of the free ends of the holding fingers (270; 290; 310) which are received in the offset surfaces, has a distance from the sheet metal part and **in that** the free ends of the holding fingers (270; 290; 310) act on withdrawal of the plunger (220) in cam-like manner against the offset surfaces (266) of the attached fastener element (260) and are hereby pivotable away from the fastener element (260) by a pivotal movement relative to the plunger (220).

16. A guide and/or setting device in accordance with claim 15, **characterised in that** the main body (232) is formed as a sleeve-like guide piece (232) which is arranged to move to and fro about the plunger (220), with the guide piece (232) having a sectioned inner wall (286, 287, 288), the holding fingers (270; 290; 310) having a sectioned outer edge (278; 316) adjacent to the inner wall of the guide piece (286, 287, 288) and the profiled outer edge (278; 316) of the holding fingers (270; 290; 310) and the sectioned inner edge (286, 287, 288) of the guide piece (232) lying next to one another and being made to cooperate in order to pivot the holding fingers (270; 290; 310) into and out of engagement with the fastener element (260), while the plunger (220) and the guide piece (232) move towards one another.

17. A guide and/or setting device in accordance with claim 15, **characterised in that** the guide and/or setting device includes bias means to bias the holding fingers (270; 290; 310) in the direction of the plunger (20) and thus to enter positively into engagement with the fastener element (260).

18. A guide and/or setting device (400) for elements (404), in particular fastener elements, comprising a hollow guide piece (440) a plunger (420) axially displaceably arranged within the guide piece (440) and holding members (462) displaceably guided perpendicular to the plunger, with holding noses (489) provided at their end associated with the end face of the plunger, wherein, in a withdrawn loading position of the plunger, one element can in each case be inserted from the side between the holding noses (489) and the free end face of the plunger (420) and the holding noses (489) are subsequently laterally outwardly moveable during an advance movement of the plunger (420) under the action of the latter in order to release the element (404), with the holding members (462) being biased towards the longitudinal axis (436) of the plunger (420) or of the guide piece (444) and having respective control surfaces (490) above the holding noses (489) which cooperate with control surfaces (421) provided on the plunger and are outwardly moveable against the bias force until the respective element (404) can be moved in the axial direction past the holding noses under the action of the plunger (420) and clamping means (495) are provided beneath the holding noses which are biased in the direction towards the longitudinal axis and which exert a clamping action on the element (404) while it is pressed by the plunger (420) past this clamping means.

19. A guide and/or setting device in accordance with claim 18, **characterised in that** the clamping means (495) are formed at least in part by clamping surfaces (496) provided at the holding members (462).

20. A guide and/or setting device in accordance with claim 18 or claim 19, **characterised in that** the clamping means (495) are formed at least in part by clamping parts (504) which are arranged beneath the holding members (462) in the guide piece and which are equipped with their own bias device (453).

21. A guide and/or setting device in accordance with any one of the previous claims 18 - 20, **characterised in that** centring pins (476) are provided in the guide piece which preferably project through the holding fingers (462) and centre the respective element (404) while it is being held by the holding fingers (462).

22. A guide and/or setting device in accordance with claim 21, **characterised in that** the guide piece (440) has contact points or contact areas (482) for the respective element (404) at points which lie opposite the loading opening for the elements.

## Revendications

1. Dispositif de guidage et/ou de mise en place (10) pour des éléments (12), en particulier pour des éléments d'assemblage, constitué par une pièce de guidage creuse (16), par un poinçon (20) agencé mobile en translation axiale à l'intérieur de la pièce de guidage (16) et par des organes de maintien (30) qui sont guidés mobiles en translation perpendiculairement au poinçon et qui comprennent, à l'une de leurs extrémités associée à l'extrémité frontale (58) du poinçon, des becs de maintien (60), dans lequel, dans une position de chargement en retrait du poinçon, un élément respectif est susceptible d'être introduit depuis le côté entre les becs de maintien (60) et l'extrémité frontale libre (58) du poinçon (20) et, pendant un mouvement d'avance du poinçon (20), les becs de maintien (60) sont alors mobiles latéralement vers l'extérieur sous l'action de celui-ci pour libérer l'élément (12), les organes de maintien (30) faisant partie d'un dispositif de support (24, 26) guidé mobile en translation parallèlement au poinçon (20), le dispositif de support étant mobile de façon synchrone avec le poinçon (20) sur une partie du mouvement du poinçon jusqu'à libérer l'élément (12), **caractérisé en ce que** le dispositif de support (24, 26) est mobile au moins essentiellement uniquement en translation linéaire, **en ce que** les organes de maintien (30) comprenant les becs de maintien (60) sont guidés mobiles en translation en direction latérale à l'intérieur du dispositif de support (24, 26), et **en ce que** la paroi intérieure (68) de la pièce de guidage (16) est telle que les organes de maintien (30), pressés vers l'intérieur dans la position de chargement du poinçon (20), peuvent être pressés latéralement vers l'extérieur par rapport au dispositif de support lorsque la position de libération est atteinte.

2. Dispositif de guidage et/ou de mise en place selon la revendication 1, **caractérisé en ce que** sur la pièce de guidage (16) est prévue au moins une butée (50) qui limite ou qui définit la position axiale du dispositif de support (24, 26) dans la position de chargement, un moyen (52, 56) étant prévu pour positionner le dispositif de support (24, 26) dans la position de chargement contre la butée (50) de la pièce de guidage (16) ou bien pour le mettre sous précontrainte contre cette butée, et **en ce que** ledit moyen est formé au choix par des butées (52, 56) prévues sur le dispositif de support (24, 26) et/ou sur le poinçon (20) et coopérant l'une avec l'autre.

3. Dispositif de guidage et/ou de mise en place selon la revendication 2, **caractérisé en ce que** la butée (56) sur le poinçon ou la butée (52) coopérant avec celle-ci sur le dispositif de support (24, 26) est agencée dans un évidement oblong (54) de l'autre pièce respective, évidement dont une extrémité (56) forme une butée et dont la longueur permet la mobilité axiale relative requise des pièces pendant le mouvement d'avance du poinçon (20).

4. Dispositif de guidage et/ou de mise en place selon l'une des revendications précédentes, **caractérisé en ce que** le poinçon (20) présente une section circulaire, elliptique, quadrangulaire, carrée ou polygonale.

5. Dispositif de guidage et/ou de mise en place selon l'une des revendications précédentes, **caractérisé en ce que** la pièce de guidage (16) présente une ouverture latérale (22) à travers laquelle l'élément respectif est susceptible d'être introduit dans une chambre (62) située entre les becs de maintien (60) et l'extrémité frontale (58) du poinçon (20) associée à ceux-ci et étant en alignement axial avec le poinçon, et **en ce qu'**il est prévu un dispositif détecteur (102), par exemple un détecteur de proximité, dans la pièce de guidage (16), afin de vérifier la présence d'un élément respectif (12) entre les becs de maintien (60) et l'extrémité frontale (58) du poinçon (20) associée à ceux-ci.

6. Dispositif de guidage et/ou de mise en place selon l'une des revendications précédentes, **caractérisé en ce que** le dispositif de support (24, 26) est formé par au moins deux doigts de maintien (26), deux de ces doigts de maintien (26) étant agencés de telle sorte qu'une ouverture est formée entre ceux-ci dans la position de chargement, laquelle présente une taille qui permet l'introduction d'un élément respectif entre les becs de maintien (60) et l'extrémité (58) du poinçon (20) associée à ceux-ci.

7. Dispositif de guidage et/ou de mise en place selon l'une des revendications 1 à 6, **caractérisé en ce que** le dispositif de support (24, 26) est formé par une douille qui présente au moins une échancrure latérale pour permettre l'introduction d'un élément respectif entre les becs de maintien et l'extrémité du poinçon associée à ceux-ci.

8. Dispositif de guidage et/ou de mise en place selon l'une des revendications précédentes, **caractérisé en ce que** les becs de maintien (60) sont formés par des billes respectives (30) qui sont agencées dans des perçages (28) du dispositif de support (24, 26) qui s'étendent en direction latérale et qui présentent à leurs extrémités intérieures des ouvertures respectives (32) qui sont plus petites que le diamètre des billes respectives (30).

9. Dispositif de guidage et/ou de mise en place selon l'une des revendications 1 à 7, **caractérisé en ce que** les organes de maintien sont formés par des tiges cylindriques respectives dont les extrémités tournées vers le poinçon et formant les becs de maintien sont arrondies.

10. Dispositif de guidage et/ou de mise en place selon l'une des revendications 1 à 7, **caractérisé en ce que** les organes de maintien (30) sont formés par des pièces de guidage prismatiques respectives dont les extrémités tournées vers le poinçon (20) sont arrondies ou chanfreinées.

11. Dispositif de guidage et/ou de mise en place selon l'une des revendications précédentes, **caractérisé en ce qu'**il est prévu un ressort pour précontraindre les organes de maintien vers l'intérieur, ou **en ce qu'**il est prévu des moyens élastiques (106) pour précontraindre les organes (30) vers l'extérieur.

12. Dispositif de guidage et/ou de mise en place selon l'une des revendications précédentes, **caractérisé en ce qu'**il est prévu un boîtier de fixation (82) dans lequel la pièce de guidage (16) est agencée mobile en translation en direction axiale du poinçon (20) et précontrainte élastiquement en éloignement du boîtier de fixation (82), le boîtier de fixation (82) étant réalisé pour l'agencement sur un outil d'une presse.

13. Dispositif de guidage et/ou de mise en place selon la revendication 12, **caractérisé en ce que** le poinçon (20) est fixé sur le boîtier de fixation (82) et la butée (50) prévue sur la pièce de guidage (16) ainsi que les butées (52, 56) coopérantes situées sur le poinçon (20) et sur le dispositif de support (24, 26) définissent conjointement la position de départ de la pièce de guidage (16) dans la position de chargement et/ou limitent le mouvement de déploiement maximal de la pièce de guidage (16) par rapport au boîtier de fixation (82).

14. Dispositif de guidage et/ou de mise en place selon l'une des revendications précédentes, **caractérisé en ce que** les organes de maintien sont réalisés pour l'utilisation avec un élément qui présente une conformation concave ou convexe au moins sur des faces mutuellement opposées et coopérant avec les organes de maintien ou autour de sa périphérie, conformation qui est écartée de sa face inférieure et qui coopère avec une conformation complémentaire sur les organes de maintien, pour que l'élément puisse être maintenu par les organes de maintien au moins jusqu'à la venue en contact avec une plaque ou de préférence jusqu'à l'achèvement de la liaison avec la plaque, sans marquer la plaque.

15. Dispositif de guidage et/ou de mise en place en combinaison avec un élément de fixation (260) pour monter l'élément de fixation (260) sur une pièce en tôle (264), le dispositif de guidage et/ou de mise en place comprenant :
- un corps principal présentant une traversée à poinçon (236) et un chemin d'entrée (256) pour la mise en place d'éléments de fixation respectifs (260) dans la traversée à poinçon (236) au voisinage du poinçon (220),
- un poinçon (220) qui est agencé mobile en va-et-vient dans la traversée à poinçon (236) du corps principal (232), le poinçon (220) présentant une extrémité libre qui est réalisée de manière à venir en engagement avec l'élément de fixation (260) lorsque l'élément de fixation (260) se trouve dans la traversée à poinçon (236), afin de chasser l'élément de fixation (260) à travers le corps principal (232) et vers la pièce en tôle (264),
- au moins deux doigts de maintien (270 ; 290 ; 310) qui sont reliés en termes d'action avec le poinçon (220) et qui sont agencés mobiles en basculement par rapport au poinçon et à l'élément de fixation (260), les doigts de maintien (270 ; 290 ; 310) s'étendant au-delà de l'extrémité libre du poinçon, afin de venir en engagement avec l'élément de fixation (260) et de maintenir celui-ci au voisinage du poinçon (220), pendant que le poinçon (220) chasse l'élément de fixation (260) vers la pièce en tôle (264),
ce pourquoi l'élément de fixation ou d'assemblage se maintient positivement dans une position correctement alignée par rapport au poinçon (220) et à la pièce en tôle (264) à partir du point auquel l'élément de fixation ou d'assemblage pénètre dans la traversée à poinçon (236), l'élément de fixation présentant sur des côtés généralement opposés des surfaces décalées qui sont réalisées spécifiquement de manière à recevoir les extrémités libres des doigts de maintien, et l'élément de fixation (260) est susceptible d'être maintenu contre la pièce en tôle (264) entre le poinçon (220) et le doigt de maintien (270 ; 290 ; 310), afin d'assurer une fixation correcte de l'élément de fixation (260),
**caractérisé en ce que**
aussi bien lors de l'engagement de l'élément de fixation (260) contre la pièce en tôle (264) que lors du montage successif de l'élément de fixation (260) sur la pièce en tôle (264), la face, tournée vers la pièce en tôle, des extrémités libres des doigts de maintien (270 ; 290 ; 310) reçues dans les surfaces décalées présente une distance de ladite pièce en tôle, et **en ce que** lors de l'éloignement du poinçon (220) les extrémités libres des doigts de maintien (276 ; 296 ; 314) agissent à la manière de cames contre les surfaces décalées (266) de l'élément de fixation (260) monté et sont ainsi mobiles en basculement en éloignement de l'élément de fixation (260) par un mouvement de basculement par rapport au poinçon (220).

16. Dispositif de guidage et/ou de mise en place selon la revendication 15, **caractérisé en ce que** le corps principal (232) est réalisé sous forme de pièce de guidage (232) en forme de douille qui est agencée mobile en va-et-vient autour du poinçon (220), la pièce de guidage (232) présentant une paroi profilée intérieure (286, 287, 288), **en ce que** les doigts de maintien (270 ; 290 ; 310) présentent une arête profilée extérieure (278 ; 316) au voisinage de la paroi intérieure de la pièce de guidage (286, 287, 288), et **en ce que** l'arête profilée extérieure (278 ; 316) des doigts de maintien (270 ; 290 ; 310) et l'arête profilée intérieure (286, 287, 288) de la pièce de guidage (232) se trouvent à côté l'une de l'autre et sont formées de manière à coopérer, afin de faire basculer les doigts de maintien (270 ; 290 ; 310) en engagement avec le et en dégagement depuis l'élément de fixation (260), pendant que le poinçon (220) et la pièce de guidage (232) se déplacent l'un par rapport à l'autre.

17. Dispositif de guidage et/ou de mise en place selon la revendication 15, **caractérisé en ce que** le dispositif de guidage et/ou de mise en place comprend des moyens de précontrainte pour précontraindre les doigts de maintien (270 ; 290 ; 310) dans la direction du poinçon (220) et pour venir ainsi positivement en engagement avec l'élément de fixation (260).

18. Dispositif de guidage et/ou de mise en place (400) pour des éléments (404), en particulier pour des éléments d'assemblage, constitué par une pièce de guidage creuse (440), par un poinçon (420) agencé mobile en translation axiale à l'intérieur de la pièce de guidage (440) et par des organes de maintien (462) qui sont guidés mobiles en translation perpendiculairement au poinçon et qui comprennent, à l'une de leurs extrémités associée à l'extrémité frontale du poinçon, des becs de maintien (489), dans lequel, dans une position de chargement en retrait du poinçon, un élément respectif est susceptible d'être introduit depuis le côté entre les becs de maintien (489) et l'extrémité frontale libre du poinçon (420) et, pendant un mouvement d'avance du poinçon (420), les becs de maintien (489) sont alors mobiles latéralement vers l'extérieur sous l'action de celui-ci pour libérer l'élément (404), les organes de maintien (462) étant précontraints en direction vers l'axe longitudinal (436) du poinçon (420) ou de la pièce de guidage (444) et présentant, au-dessus des becs de maintien (489), des surfaces de commande respectives (490) qui coopèrent avec des surfaces de commande (421) prévues sur le poinçon et qui sont susceptibles d'être déplacées temporairement vers l'extérieur à l'encontre de la force de précontrainte, jusqu'à ce que l'élément respectif (404) soit susceptible de passer le long des becs de maintien en direction axiale sous l'action du poinçon (420), et il est prévu des moyens de serrage (495) au-dessous des becs de maintien, qui sont précontraints en direction vers l'axe longitudinal et qui exercent un effet de serrage sur l'élément (404) pendant qu'il passe le long de ce moyen de serrage en étant poussé par le poinçon (420).

19. Dispositif de guidage et/ou de mise en place selon la revendication 18, **caractérisé en ce que** les moyens de serrage (495) sont formés au moins en partie par des surfaces de serrage (496) prévues sur les organes de maintien (462).

20. Dispositif de guidage et/ou de mise en place selon l'une ou l'autre des revendications 18 et 19, **caractérisé en ce que** les moyens de serrage (495) sont formés au moins en partie par des pièces de serrage (504) agencées au-dessous des organes de maintien (462) dans la pièce de guidage, lesquelles sont équipées d'un propre dispositif de précontrainte (453).

21. Dispositif de guidage et/ou de mise en place selon l'une des revendications 18 à 20, **caractérisé en ce qu'**il est prévu des tiges de centrage (476) soutenues dans la pièce de guidage, qui traversent de préférence les doigts de maintien (462) et centrent l'élément respectif (404) pendant qu'il est retenu par les doigts de maintien (462).

22. Dispositif de guidage et/ou de mise en place selon la revendication 21, **caractérisé en ce que** la pièce de guidage (440) présente des points ou surfaces d'appui (482) pour l'élément respectif (404) à des emplacements qui sont opposés à l'ouverture de chargement pour les éléments.
